# EUROPEAN PATENT SPECIFICATION

(11) **EP 1 650 285 B1**
(45) Date of publication and mention of the grant of the patent: **30.04.2008**
(21) Application number: 06000505.5
(22) Date of filing: 08.02.2002
(51) Int. Cl.: C09K 19/20, C09K 19/30, C09K 19/32, C09K 19/14, C09K 19/16, C09K 19/18, C09K 19/54

(54) **Liquid crystal composition containing an optically active compound and liquid crystal electro-optical element**
Flüssigkristallzusammensetzung enthaltend optisch aktive Verbindung und flüssigkristallines elektrooptisches Element
Composition de cristaux liquides contenant un composé optiquement actif et élément électro-optique à cristaux liquides

(30) Priority: 08.02.2001 JP 2001032682; 12.10.2001 JP 2001315739; 07.12.2001 JP 2001373886
(43) Date of publication of application: 26.04.2006
(62) Divisional of application: 02711421.4
(73) Proprietor: Seimi Chemical Co., Ltd., Chigasaki-city, Kanagawa 253-8585 (JP)
(72) Inventor: Yokokouji, Osamu, Chigasaki-city Kanagawa 253-8585 (JP); Tachibana, Tamon, Chigasaki-city Kanagawa 253-8585 (JP); Oiwa, Masaki, Chigasaki-city Kanagawa 253-8585 (JP); Shimizu, Kanetaka, Chigasaki-city Kanagawa 253-8585 (JP); Koike, Takeshi, Chigasaki-city Kanagawa 253-8585 (JP)
(74) Representative: Müller-Boré & Partner Patentanwälte

(56) References cited:
- EP-A- 0 217 354
- EP-A- 0 311 329
- EP-A- 0 315 193
- WO-A-95/14067
- US-A- 5 209 867
- PATENT ABSTRACTS OF JAPAN vol. 1997, no. 01, 31 January 1997 (1997-01-31) -& JP 08 245960 A (DAINIPPON INK CHEM INC), 24 September 1996 (1996-09-24)
- PATENT ABSTRACTS OF JAPAN vol. 017, no. 577 (C-1122), 20 October 1993 (1993-10-20) -& JP 05 170679 A (ASAHI GLASS CO LTD), 9 July 1993 (1993-07-09)

## Description

### TECHNICAL FIELD

The present invention relates to a liquid crystal composition containing a novel optically active compound, and a liquid crystal electro-optical element employing the liquid crystal composition.

### BACKGROUND ART

Liquid crystal electro-optical elements are used for various applications such as not only display devises for office automation equipment, but also measuring devices, automotive instruments, display devices for home electric appliance, clocks and desk-top calculators.

A liquid crystal electro-optical element has such a structure that a pair of substrates, at least.one of the substrates having a transparent electrode, an intermediate protective film and a liquid crystal alignment film formed on its surface, is disposed with a certain distance, and a liquid crystal material is enclosed between the substrates, and it functions as an optical switching element by applying a voltage from the electrode to the liquid crystal material to change the alignment state of the liquid crystal material thereby to change its optical properties.

For twisted nematic (TN) and super twisted nematic (STN) liquid crystal electro-optical elements, a liquid crystal composition having a small amount of an optically active compound (chiral agent) added thereto is employed to achieve uniform twist alignment.

Optically active compounds widely used at present may, for example, be a compound of the following formula (CN), a compound of the following formula (CB-15) and a compound of the following formula (R-811). Further, a liquid crystal composition having an optically active compound added thereto is employed also for a reflective cholesteric (chiral nematic) liquid crystal element.

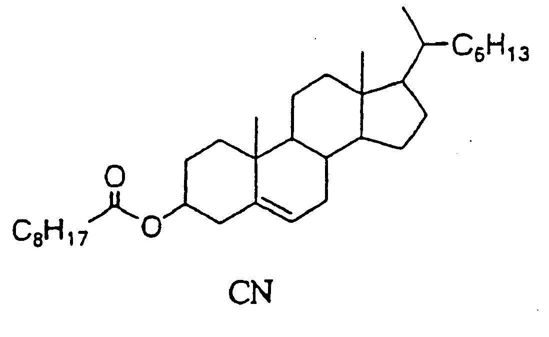

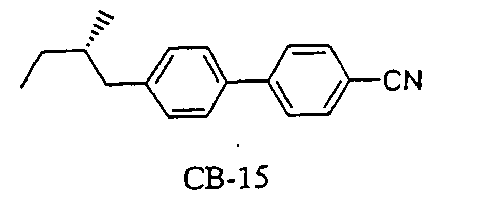

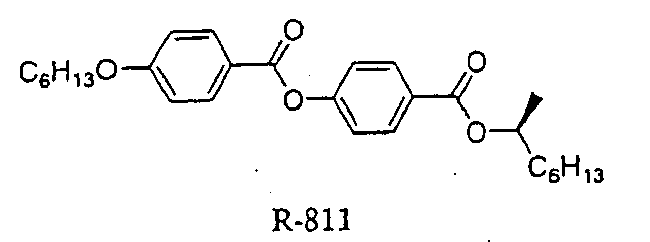

However, a cholesteric liquid crystal (chiral nematic liquid crystal) composition has a high viscosity, and thus it has such problems as a low speed of response and a high driving voltage, since a large amount of the optically active compound is added thereto. There is a corelation between the driving voltage of a liquid crystal element and the dielectric anisotropy (Δε) of a liquid crystal composition, and a liquid crystal composition having a high dielectric anisotropy can be driven at a low driving voltage. In order to make a reflective cholesteric (chiral nematic) liquid crystal element be driven at a low voltage, an optically active compound having a high dielectric anisotropy as well as a nematic liquid crystal composition having a high dielectric anisotropy has been required.

The applicant has proposed an optically active compound having a low viscosity and a high helical twisting power in JP-A-11-255675. However, the helical twisting power of the optically active compounds as specifically disclosed in JP-A-11-255675 is insufficient particularly for a reflective cholesteric (chiral nematic) liquid crystal element, and thus a higher helical twisting power is required, and further, optically active compounds having a high dielectric anisotropy which have not been realized in JP-A-11-255675 are required.

The helical pitch length induced when an optically active compound is added to a liquid crystal composition is determined by the helical twisting power characteristic to the compound. The smaller the helical twisting power of an optically active compound, the longer the helical pitch length induced, and the addition amount has to be increased to shorten the helical pitch length. In general, if the addition amount of the optically active compound is increased, performances as a liquid crystal material tend to decrease, as compared with before addition and problems are caused such as an increase in the viscosity, a decrease in the speed of response, an increase in the driving voltage, a decrease in the isotropic phase transition temperature and a reduction of the temperature range at which a specific phase such as a nematic phase or a cholesteric phase is shown. Thus, an optically active compound having a high helical twisting power has been required.

In order to overcome such objects, JP-A-10-251185 proposes optically active compounds having a low viscosity and a high helical twisting power.

In recent years, attention has been paid to a reflective cholesteric liquid crystal element employing a cholesteric liquid crystal composition having a large amount (at a level of from 10 to 30 wt%) of an optically active compound added to a nematic liquid crystal composition, and utilizing such a phenomenon that the cholesteric liquid crystal selectively reflects light having a wavelength equal to the product of the average reflective index of the liquid crystal material and the helical pitch length. The reflective cholesteric liquid crystal element has a high efficiency of light since no deflecting plate or color filter is required, and a higher brightness can be obtained when a liquid crystal composition having a higher reflective index anisotropy (Δn) is employed. Further, a voltage has to be applied only when the changeover of display (writing) since the display state is maintained (memory properties), whereby the element consumes only a low electric power. However, since a large amount of an optically active compound is added, the cholesteric liquid crystal composition has a high viscosity, whereby there are problems such as a low speed of response and a high driving voltage. In order to overcome such problems, an optically active compound which has a helical twisting power higher than that of the optically active compounds as disclosed in JP-A-10-251185, and which provides an aimed helical pitch length even by addition in a small amount, has been required.

Further, many of practicable liquid crystal compositions are prepared by mixing at least one compound having a nematic phase in the vicinity of room temperature and at least one compound having a nematic phase in a temperature region higher than room temperature. Further, in recent years, along with diversification of products to which liquid crystal electro-optical elements are applied, a liquid crystal composition having an increased operating temperature range to the high temperature side has been required, and accordingly, particularly a liquid crystal composition having a high transition temperature from the liquid crystal phase to the isotropic phase [hereinafter' referred to as clear point (Tc)] has been required.

Accordingly, an optically active compound which, when added to a liquid crystal composition, does not lower the clear point (Tc) of the liquid crystal composition has been required.

EP-A-0 311 329 describes optically active 1-(2-halogen-substituted-phenyl)-ethanols and derivatives thereof for use in liquid crystal compositions.

EP-A-0 315 193 describes an optically active compound and a chiral liquid crystal composition containing the same.

US-patent 5,209,867 describes novel derivatives of aromatic carboxylic acid esters which are useful as a dopant for liquid crystal compositions, and smectic liquid crystal compositions containing at least one of said derivatives.

EP-A-0 217 354 describes an optically active tolan derivative which is useful as an electro-optical display material.

JP-A-08-245960 describes a liquid crystal composition comprising a specific monofunctional polymerizable chiral monomer and an unpolymerizable nematic liquid crystal compound, wherein the liquid crystal composition is capable of regulating its intrinsic pitch within a wide range of temperatures.

WO-A-95/14067 describes a chiral nematic liquid crystalline composition comprising a glassy chiral nematic compound of low molar mass that includes a cycloaliphatic radical, a nematogenic moiety, and a chiral moiety, or a mixture of a nematic liquid crystalline compound of low molar mass that includes a cycloaliphatic radical and a nematogenic moiety and a chiral compound of low molar mass that includes a chiral moiety.

JP-05-170679 describes a monofluoroalkane derivative and a liquid crystal composition.

It is an object of the present invention to provide a liquid crystal composition which contains a novel optically active compound having a high helical twisting power, having a high dielectric anisotropy (Δε) and providing excellent performances also as a chiral agent, and which can be driven at a low voltage, and a liquid crystal element employing the liquid crystal composition, particularly a STN or cholesteric (chiral nematic) liquid crystal element.

### DISCLOSURE OF THE INVENTION

Under these circumstances, the present invention has been accomplished to overcome the above problems, and provides a liquid crystal composition containing at least an optically active compound of the following formula (2) (C* is asymmetric carbon):

(2) R¹-A¹-C*HX¹-Y¹-A²-Z¹-A³-Z²-A⁴-R²

wherein A¹ is a non-substituted 1,4-phenylene group, a 1,4-phenylene group substituted with at least one halogen atom or a non-substituted 2,6-naphthylene group,
each of A², A³, and A⁴ which are independent of one another, is a non-substituted 1,4-phenylene group, a 1,4-phenylene group substituted with at least one halogen atom or a non-substituted trans-1,4-cyclohexylene group,
each of R¹ and R² which are independent of each other, is a C₁₋₁₀ aliphatic hydrocarbon group, a C₁₋₁₀ aliphatic hydrocarbon group substituted with at least one halogen atom, a hydrogen atom, a halogen atom or a cyano group, provided that in a case of a C₁₋₁₀ aliphatic hydrocarbon group or a C₁₋₁₀ aliphatic hydrocarbon group substituted with at least one halogen atom, an ethereal oxygen atom (-O-) may be inserted in the carbon-carbon linkage in the group or the carbon-carbon linkage connecting the group and the ring,
X¹ is -F, -CH₃, -CH₂F, -CHF₂ or -CF₃,
Y¹ is -CH₂-, -CO-, -CH₂CH₂-, -COO-, -CH₂CO-, -COCH₂-, -CH₂O-, -CH₂CH₂CH₂-, -CH₂COO- , -COOCH₂-, -CH₂CH₂CO-, -CH₂COCH₂- , -COCH₂CH₂-, -CH₂CH₂O- or -CH₂OCH₂-, and
each of Z¹ and Z² which are independent of each other, is -COO-, -OCO-, -CH₂O-, -OCH₂-, -CH₂CH₂-, -C≡C-, -CF=CF- or a single bond, provided that a case where Y¹ is -CO- or -CH₂O- is excluded, and when A² is a non-substituted 1,4-phenylene group or a 1,4-phenylene group having at least one halogen atom, both A³ and A⁴ are trans-1,4-cyclohexylene groups, and Z¹ is a single bond, Z² is -COO-, -OCO-, -CH₂O-, -OCH₂-, -CF=CF- or a single bond.

The optically active compounds of the formula (2) have excellent characteristics such as a low viscosity and a high helical twisting power although they have a tetracyclic structure and have an extremely high clear point (Tc) due to direct binding of the asymmetric carbon atom C* and the ring group A¹. Further, the optically active compounds (2) are chemically stable, and are excellent in compatibility with another liquid crystal or non-liquid crystal compound.

As the optically active compounds (2) of the present invention, specifically the following compounds are preferred. In each formula, the carbon atom with a symbol * represents an asymmetric carbon atom, and its absolute configuration may be either R or S. R¹, R², X¹, Y¹, Z¹ and Z² are as defined for the formula (2). The steric configuration of the 1,4-cyclohexylene group in each formula is trans-form. In each formula, the symbol (Hal) represents that the compound is not substituted or substituted with at least one halogen atom, and in a case where the compound is substituted with at least two halogen atoms, these halogen atoms may be the same or different. In a case where the compound is substituted with at least one halogen atom, in order to represent the substituted position, the substituted position is defined as follows for convenience sake.

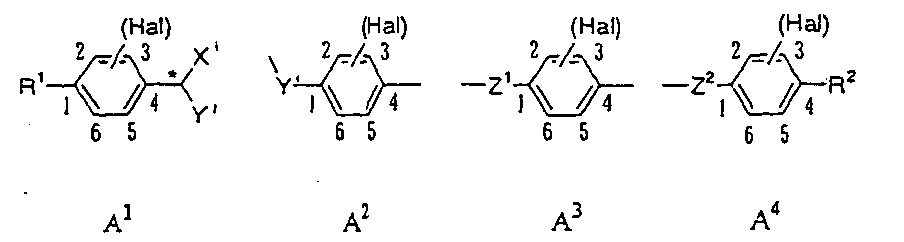

As examples of the compounds, the following may be preferably mentioned.

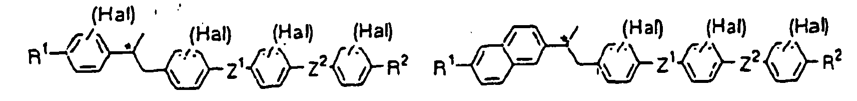

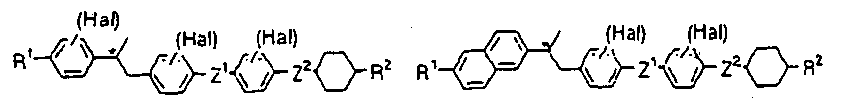

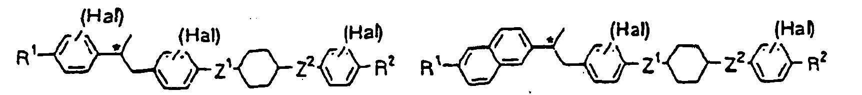

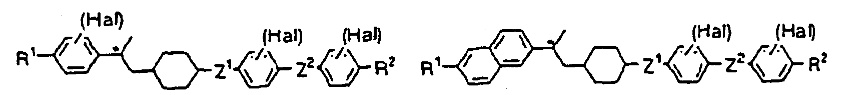

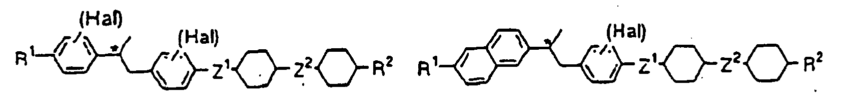

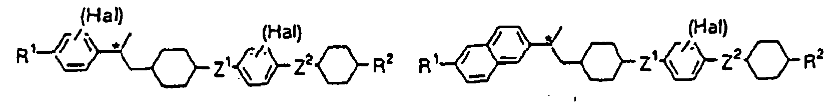

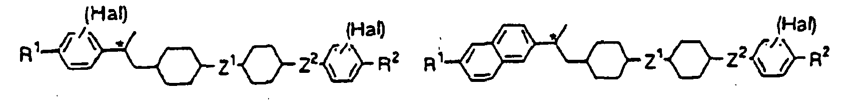

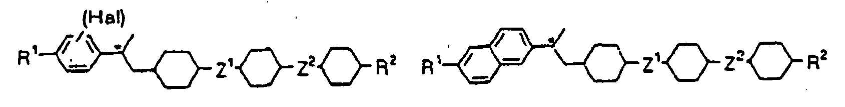

These optically active compounds of the present invention have a high helical twisting power and at the same time, have an extremely high clear point (Tc) and a low viscosity. Further, they are chemically stable, and are excellent in compatibility with another compound such as another liquid crystal or non-liquid crystal compound.

In a case where a liquid crystal composition having a particularly high positive dielectric anisotropy is produced so as to decrease the driving voltage of the liquid crystal electro-optical element, a compound having a high dielectric anisotropy is employed. Such an object may be achieved by a compound wherein either one of R¹ and R² is a halogen atom or a cyano group, and/or at least one of A¹, A², A³ or A⁴ is a 1,4-phenylene group having one or two halogen atom(s). In such a case, in a case where R¹ is a halogen atom or a cyano group, at least one of A¹, A², A³ and A⁴ is preferably a 1,4-phenylene group having a halogen atom at the 2- and/or 6-position(s), and in a case where R² is a halogen atom or a cyano group, at least one of A¹, A², A³ and A⁴ is preferably a 1,4-phenylene group having a halogen atom at the 3- and/or 5-position(s).

For a liquid crystal composition employed for a liquid crystal electro-optical element which is driven by applying an electric field in parallel with the molecular long axis direction of a liquid crystal compound, a compound having a negative dielectric anisotropy is employed. The compound having a negative dielectric anisotropy may be achieved by a compound wherein at least one of A¹, A², A³ and A⁴ is a 1,4-phenylene group having a halogen atom at the 2- and/or 3-position(s).

For a liquid crystal composition employed for a liquid crystal electro-optical element, several types of liquid crystalline or non-liquid crystalline compounds are mixed. Thus, the optically active compound is required to have good compatibility with another liquid crystalline or non-liquid crystalline compounds. The optically active compounds (2) of the present invention are excellent in compatibility with another liquid crystalline or non-liquid crystalline compound, and compatibility will more improve with a compound wherein at least one of A¹, A², A³ and A⁴ is a 1,4-phenylene group having a halogen atom.

The helical pitch length induced when the optically active compound is added to the liquid crystal ' composition is determined by the helical twisting power characteristic to the compound. As described above, addition of a large amount of the optically active compound decreases performances of the liquid crystal material, and thus the optically active compound is required to have a high helical twisting power to decrease the addition amount.

The optically active compounds (2) of the present invention have a high helical twisting power, and the helical twisting power can be made higher by employing a compound wherein A¹ and/or A² is a 1,4-phenylene group having at least one halogen atom. In such a case, A¹ is preferably a 1,4-phenylene group having a halogen atom at the 3- and/or 5-position(s), and A² is preferably a 1,4-phenylene group having a halogen atom at the 2- and/or 6-position(s).

In a case where each of A¹, A², A³ and A⁴ has at least one halogen atom(s), the halogen atom is preferably a chlorine atom and/or a fluorine atom, particularly preferably from 1 to 3 fluorine atom(s).

In a case where each of R¹ and R² is a halogen atom, preferred is a chlorine atom, a bromine atom or a fluorine atom, particularly preferred is a chlorine atom or a fluorine atom.

Each of R¹ and R² which are independent of each other, is a hydrogen atom, a C₁₋₁₀ aliphatic hydrocarbon group or a C₁₋₁₀ aliphatic hydrocarbon group having at least one halogen atom, and R¹ is preferably a hydrogen atom in view of a high helical twisting power and availability of the material.

The C₁₋₁₀ aliphatic hydrocarbon group as each of R¹ and R² may have a linear structure or a branched structure. The aliphatic hydrocarbon group is preferably an alkyl group, an alkenyl group or an alkynyl group. The C₁₋₁₀ alkyl group may, for example, be a methyl group, an ethyl group, a propyl group, a butyl group, a pentyl group, a hexyl group, a heptyl group, an octyl group, a nonyl group, a decyl group, an isobutyl group or a 1-methyl-heptyl group. The C₁₋₁₀ alkenyl group is preferably one wherein the carbon-carbon double bond is a trans-bond, particularly preferably a 3-butenyl group or a 3-trans-pentenyl group.

The C₁₋₁₀ aliphatic hydrocarbon group having at least one halogen atom may be a group having at least one hydrogen atom in the above aliphatic hydrocarbon group substituted with a halogen atom. The halogen atom is preferably a chlorine atom and/or'a fluorine atom, particularly preferably a fluorine,atom.

In a case where each of R¹ and R² is a' C₁₋₁₀ aliphatic hydrocarbon group or a C₁₋₁₀ aliphatic hydrocarbon group having at least one halogen atom, an ethereal oxygen atom (-O-) may be inserted in the carbon-carbon linkage in the group and/or in the carbon-carbon linkage connecting the group and the ring. The group having an ethereal oxygen atom and/or ester linkage inserted thereinto may, for example, be an alkoxy group, an alkoxyalkyl group, an alkoxyalkoxy group, a fluoroalkoxy group, a fluoroalkoxyalkyl group, a perfluoroalkoxyalkyl group, an alkoxycarbonyl group or an alkylcarbonyloxy group.

The alkoxy group may, for example, be a methoxy group, an ethoxy group, a propoxy group, a butoxy group, a pentyloxy group, a hexyloxy group, a heptyloxy group, an octyloxy group, a nonyloxy group, a decyloxy group, an isobutoxy group or a 1-methyl-heptyloxy group.

The alkoxyalkyl group may, for example, be a 2-methoxyethyl group, a 2-ethoxyethyl group, a 2-propoxyethyl group, a 2-butoxyethyl group, a 2-pentyloxyethyl group, a 2-isobutoxyethyl group, a 2-(1-methyl-heptyloxy)ethyl group, a 4-methoxybutyl group, a 4-ethoxybutyl group, a 4-propoxybutyl group, a 4-butoxybutyl group or a 4-pentyloxybutyl group.

The alkoxyalkoxy group may, for example, be a 2-methoxyethoxy group, a 2-ethoxyethoxy group, a 2-propoxyethoxy group, a 2-butoxyethoxy group, a 2-pentyloxyethoxy group, a 2-isobutoxyethoxy group, a 2-(1-methyl-heptyloxy)ethoxy group, a 4-methoxybutoxy group, a 4-ethoxybutoxy group, a 4-propoxybutoxy group, a 4-butoxybutoxy group or a 4-pentyloxybutoxy group.

In a case where the C₁₋₁₀ aliphatic hydrocarbon group or the C₁₋₁₀ aliphatic hydrocarbon group having at least one halogen atom has a branched structure, an asymmetric carbon atom may be contained in such a group, and the asymmetric carbon atom preferably has e.g. a fluorine atom, a chlorine atom, a methyl group or a trifluoromethyl group bonded thereto.

X¹ is preferably -F, -CH₃ or -CF₃ in view of easiness of synthesis, and Y¹ is preferably -CH₂- since a particularly high helical twisting power will be obtained.

Each of Z¹ and Z² which are independent of each other, is preferably -COO-, -OCO-, -CH₂CH₂-, -CF=CF- or a single bond.

Among these optically active compounds (2), (a) an optically active compound wherein A¹ is a non-substituted 1,4-phenylene group or a 1,4-phenylene group having from 1 to 2 fluorine atom(s), X is -CH₃ and Y is -CH₂- is one of particularly preferred embodiments since it has a particularly low viscosity and a high helical twisting power.

Further, in addition to (a), (b) an optically active compound wherein each of A², A³ and A⁴ which are independent of one another, is a non-substituted 1,4-phenylene group, a 1,4-phenylene group having from 1 to 2 fluorine atom(s) or a non-substituted trans-1,4-cyclohexylene group, and each of Z¹ and Z² which are independent of each other, is -COO-, -CH₂CH₂- or a single bond, is one of particularly preferred embodiments since it has a low viscosity and high helical twisting power.

Further, in addition to (a) and (b), (c) an optically active compound wherein A⁴ is a 1,4-phenylene group having from 1 to 2 fluorine atom(s), and R² is a cyano group, is one of particularly preferred embodiments since it has a high positive dielectric anisotropy, and it is thereby effective to decrease the driving voltage of a liquid crystal electro-optical element.

Further, in addition to (a) and (b), an optically active compound wherein A² is a 1,4-phenylene group having from 1 to 2 fluorine atom(s) is one of particularly preferred embodiments since it has a particularly high helical twisting power.

Here, of the optically active compounds (2) of the present invention, a case where each of A¹ and A² is a non-substituted 1,4-phenylene group, each of A³ and A⁴ is a non-substituted trans-1,4-cyclohexylene group, each of Z¹ and Z² is a single bond, X¹ is CH₃, Y¹ is -CH₂-, and each of R¹ and R² is a C₁₋₁₀ alkyl group, an alkoxy group, an alkenyl group or a hydrogen atom, and a case where A¹ is a non-substituted 1,4-phenylene group, each of A², A³ and A⁴ is a non-substituted trans-1,4-cyclohexylene group, each of Z¹ and Z² is a single bond, X¹ is -CH₃, Y¹ is -CH₂-, and each of R¹ and R² is a C₁₋₁₀ alkyl group, an alkoxy group, an alkenyl group or a hydrogen atom, are preferably excluded.

Such optically active compounds (2) are chemically stable, and excellent in compatibility with another liquid crystalline or non-liquid crystalline compound, and accordingly they can be mixed with such a compound to obtain a liquid crystal composition, and it can further raise the clear point (Tc) without increasing the viscosity of the liquid crystal composition. Accordingly, the liquid crystal composition is a composition excellent for production of a liquid crystal electro-optical element which has a high speed of response and a wide range of operating temperature.

In order to obtain a liquid crystal composition, usually at least one type of the optically active compound (2) of the present invention is incorporated in another liquid crystalline compound and/or non-liquid crystalline compound (hereinafter sometimes another liquid crystalline compound and non-liquid crystalline compound will generically be referred to as another compound). The amount of the optically active compound (2) in the liquid crystal composition optionally varies depending upon e.g. the application, the purpose of use and the type of another compound, but in a usual case, it is preferably from 0.1 to 50 parts by mass, particularly preferably from 0.1 to 20 parts by mass in 100 parts by mass of the liquid crystal composition.

Another compound to be used to obtain the liquid crystal composition optionally varies depending upon e.g. the application or the performances required, but usually preferred is one comprising a liquid crystalline compound and a component having a structure similar to that of the liquid crystalline compound as the main components and an additive component as the case requires.

With respect to the liquid crystal composition containing the optically active compound (2), examples of another compound contained in the composition are as follows. In the following formulae, Ph represents a 1,4-phenylene group, Cy represents a trans-1,4-cyclohexylene group, PhF₂CN represents a 3,5-difluoro-4-cyanophenyl group, and each of R³ and R⁴ represents a group such as an alkyl group, an alkenyl group, an alkynyl group, an alkoxy group, a halogen atom or a cyano group. R³ and R⁴ may be the same or different. X¹ represents F or a methyl group.

R³-Cy-Cy-R⁴

R³-Cy-Ph-R⁴

R³-Cy-PhF₂CN

R³-Ph-Ph-R⁴

R³-Ph-C≡C-Ph-R⁴

R³-Cy-COO-Ph-R⁴

R³-Cy-COO-PhF₂CN

R³-Ph-COO-Ph-R⁴

R³-Ph-COO-PhF₂CN

R³-Cy-CH=CH-Ph-R⁴

R³-Ph-CH=CH-Ph-R⁴

R³-Ph-CF=CF-Ph-R⁴

R³-Cy-CF=CF-Ph-R⁴

R³-Cy-CF=CF-Cy-R⁴

R³-Cy-Ph-CF=CF-Ph-R⁴

R³-Cy-Ph-CF=CF-Cy-R⁴

R³-Ph-Cy-CF=CF-Cy-R⁴

R³-Cy-Cy-CF=CF-Ph-R⁴

R³-Ph-Ph-CF=CF-Ph-R⁴

R³-Cy-CH₂CH₂-Ph-R⁴

R³-Cy-Ph-CH₂CH₂-Ph-R⁴

R³-Cy-Ph-CH₂CH₂-Cy-R⁴

R³-Cy-Cy-CH₂CH₂-Ph-R⁴

R³-Ph-CH₂CH₂-Ph-R⁴

R³-Ph-Ph-CH₂CH₂-Ph-R⁴

R³-Ph-Ph-CH₂CH₂-Cy-R⁴

R³-Cy-Ph-Ph-R⁴

R³-Cy-Ph-Ph-R⁴

R³-Cy=Ph-PhF₂CN

R³-Cy-Ph-C≡C-Ph-R⁴

R³-Cy-Ph-C≡C-PhF₂CN

R³-Cy-Ph-C≡C-Ph-Cy-R⁴

R³-Cy-CH₂-CH₂-Ph-C≡C-Ph-R⁴

R³-Cy-CH₂CH₂-Ph-C≡C-Ph-Cy-R⁴

R³-Cy-Ph-Ph-Cy-R⁴

R³-Ph-Ph-Ph-R⁴

R³-Ph-Ph-C≡C-Ph-R⁴

R³-Ph-CH₂CH₂-Ph-C≡C-Ph-R⁴

R³-Ph-CH₂CH₂-Ph-C≡C-Ph-Cy-Ry

R³-Cy-COO-Ph-Ph-R⁴

R³-Cy-COO-Ph-PhF₂CN

R³-Cy-Ph-COO-Ph-R⁴

R³-Cy-Ph-COO-PhF₂CN

R³-Cy-COO-Ph-COO-Ph-R⁴

R³-Cy-COO-Ph-COO-PhF₂CN

R³-Ph-COO-Ph-COO-Ph-R⁴

R³-Ph-COO-Ph-OCO-Ph-R⁴

R³-Cy-CH₂CH₂-PhF₂CN

R³-Ph-CH₂CH₂-PhF₂CN

R³-Ph-Cy-CH₂CH₂-PhF₂CN

R³-Cy-Ph-CH₂CH₂-PhF₂CN

R³-Cy-Cy-CH₂CH₂-PhF₂CN

R³-Ph-C*HX¹-CH₂-Ph-R⁴

R³-Ph-C*HX¹-CH₂-Cy-R⁴

R³-Ph-C*HX¹-CH₂-Ph-Cy-R⁴

R³-Ph-C*HX¹-CH₂-Cy-Ph-R⁴

R³-Ph-C*HX¹-CH₂-Ph-Ph-R⁴

These compounds are mentioned as examples, and a hydrogen atom in the ring structure or the terminal group R³ or R⁴ in these compounds may be substituted with e.g. a halogen atom, a cyano group or a methyl group. Further, the trans-1,4-cyclohexylene group or the 1,4-phenylene group may be substituted with another 6-membered ring or 5-membered ring such as a pyrimidine ring or a dioxane ring, and the binding group between rings may be substituted with e.g. another bivalent binding group, and various compounds may be selected depending upon the required performances. Further, the optically active compounds (2) are excellent in compatibility with another compound, whereby the concentration of the optically active compound (2) in the liquid crystal composition can be freely adjusted from the low concentration to the high concentration.

Such a liquid crystal composition of the present invention may be sandwiched between substrates provided with an electrode by e.g. injection into a liquid crystal cell, and may be employed as a liquid crystal electro-optical element of various modes such as twisted nematic mode, guest/host mode, dynamic scattering mode, phase change mode, DAP mode, two-frequency driving mode, ferroelectric liquid crystal display mode and reflective cholesteric liquid crystal display mode.

As a process for producing a liquid crystal electro-optical element, basically the following process may be mentioned. Namely, on a substrate of e.g. plastic or glass, an undercoat layer of e.g. SiO₂ or Al₂O₃ or a color filter layer is formed as the case requires, an electrode of e.g. In₂O₃-SnO₂ (ITO) or SnO₂ is formed thereon, followed by patterning, and then an overcoat layer of e.g. polyimide, polyamide, SiO₂ or Al₂O₃ is formed as the case requires, followed by alignment treatment, and a sealing material is printed thereon, and such substrates are disposed so that the electrode sides face each other and the periphery is sealed, and the sealing agent is cured to form an empty cell.

The liquid crystal composition of the present invention is injected into this empty cell, and the inlet is sealed with a sealing compound to constitute a liquid crystal cell. On the liquid crystal cell, as the case requires, e.g. a deflecting plate, a color deflecting plate, a light source, a color filter, a semipermeable reflecting plate, a reflecting plate, an optical waveguide or an ultraviolet cut filter may be laminated, e.g. characters or figures are printed, or a nonglare treatment is carried out, to produce a liquid crystal electro-optical element.

Since the optically active compounds (2) of the present invention has a high helical twisting power, a liquid crystal composition having an aimed helical pitch can be obtained by addition of a small amount to the liquid crystal composition as compared with a conventional optically active compound.

Thus, when the liquid crystal composition is employed to obtain a TN or STN liquid crystal electro-optical element, uniform twist alignment can be achieved, and when it is employed to obtain a reflective cholesteric liquid crystal electro-optical element, an aimed reflection wavelength can be obtained.

The liquid crystal composition containing the optically active compound (2) of the present invention can be used also as a liquid crystal electro-optical element of various modes such as an active matrix element, a polymer dispersion liquid crystal element, a GH liquid crystal element employing a polychromatic colorant and a ferroelectric liquid crystal element. Further, it may also be used for applications other than for display, such as a dimmer element, a dimmer window, an optical shutter, a polarization exchange element, a varifocal lens, an optical color filter, a colored film, an optical recording element and a temperature indicator.

The optically active compounds (2) of the present invention can easily be produced industrially in accordance with the following process. In easy formula,' C*, A¹, A², A³, A⁴, R¹, R², Z¹, Z², X¹ and Y¹ are as defined above.

### [Process 1]

In a case where Y¹ is -CO-, -CH₂CO- or -CH₂CH₂CO-, and each of Z¹ and Z² is not -COO- or -OCO-

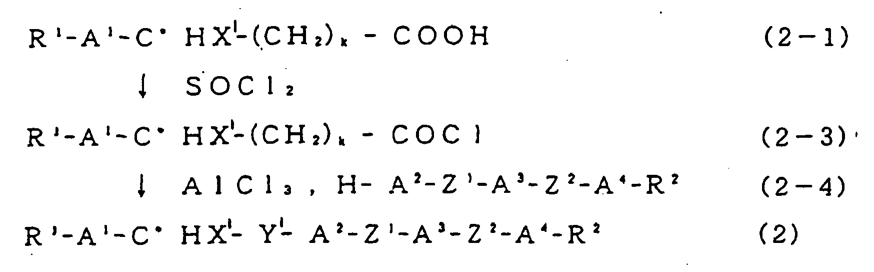

An optically active carboxylic acid (2-1) is subjected to acid chloridation with e.g. thionyl chloride to obtain an acid chloride (2-3), which is subjected to Friedel-Crafts reaction with a benzene derivative (2-4) in the presence of a Lewis acid such as aluminum chloride to obtain an aimed compound (2). In each reaction, the optical purity of the optically active compound of each formula is maintained. In each of the formulae (2-2) and (2-3), k is 0, 1 or 2.

### [Process 2]

In a case where Y¹ is -COCH₂-, -CH₂COCH₂- or -COCH₂CH₂-, and each of Z¹ and Z² is not -COO- or -OCO-

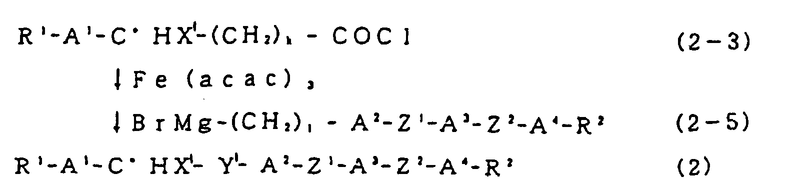

An acid chloride (2-3) is reacted with a Grignard reagent (2-5) in the presence of an organic metal catalyst such as iron(III) acetylacetonate to obtain an aimed compound (2). In each reaction, the optical purity of the optically active compound of each formula is maintained. In the formula (2-3), k is 0 or 1, and in the formula (2-5), 1 is 1 or 2, and k + 1 is at most 2.

### [Process 3]

In a case where Y¹ is -CH₂CO-, -CH₂CH₂CO- or -CH₂COCH₂-, and each of Z¹ and Z² is not -COO- or -OCO-

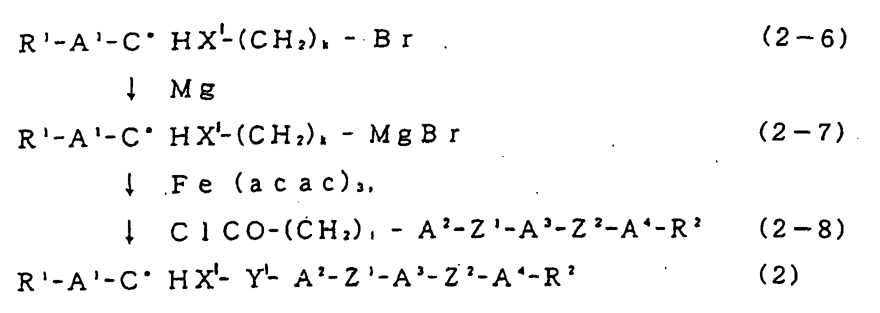

An optically active bromide (2-6) is formed into a Grignard reagent (2-7) with magnesium, which is reacted with an acid chloride (2-8) in the presence of an organic metal catalyst such as iron(III) acetylacetonate to obtain an aimed compound (2). In each reaction, the optical purity of the optically active compound of each formula is maintained. In each of the formulae (2-6) and (2-7), k is 1 or 2, and in the formula (2-8), 1 is 0 or 1, and k + 1 is at most 2.

### [Process 4]

In a case where Y¹ is -CH₂-, -CH₂CH₂- or -CH₂CH₂CH₂-, and each of Z¹ and Z² is not -COO- or -OCO-

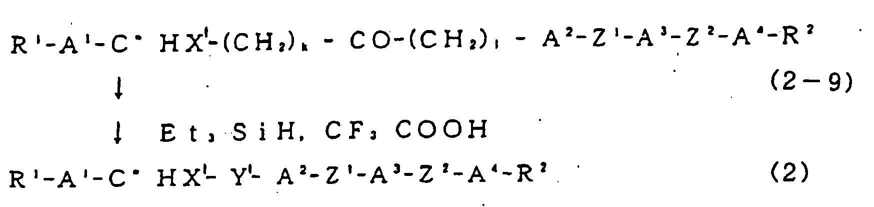

A ketone compound (2-9) is reduced with a reducing agent such as triethylsilane in the presence of trifluoroacetic acid to obtain an aimed compound (2). The optical purity of the optical active compound of each formula is maintained. In the formula (9), each of k and 1 is 0, 1 or 2, and k + 1 is at most 2.

### [Process 5]

In a case where Z¹ is -COO-

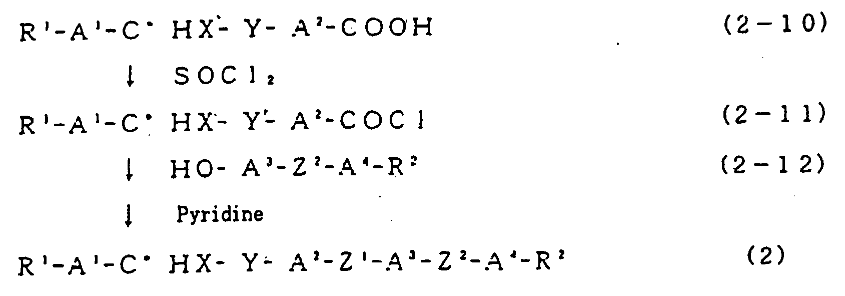

### [Process 6]

In a case where Z² is -COO-

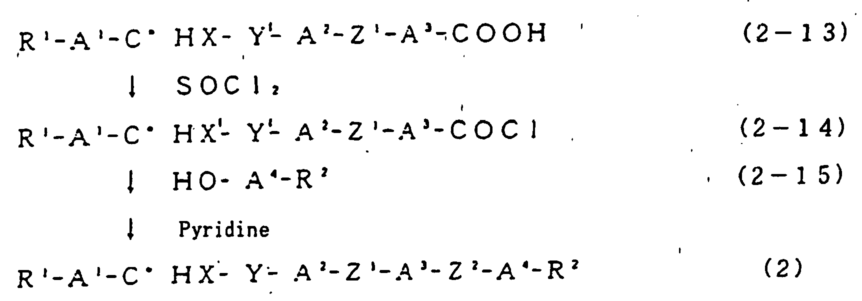

### [Process 7]

In a case where Z¹ is -OCO-

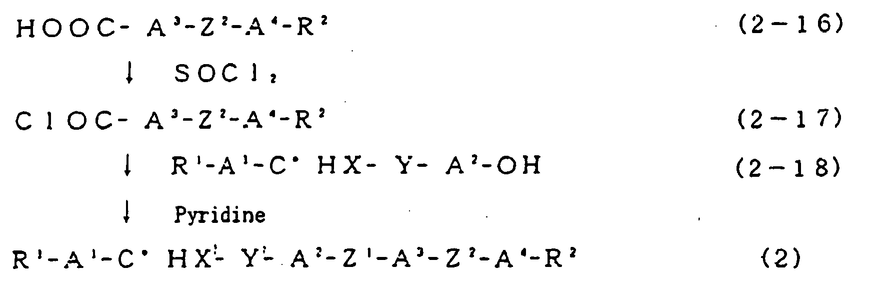

### [Process 8]

In a case where Z² is -OCO-

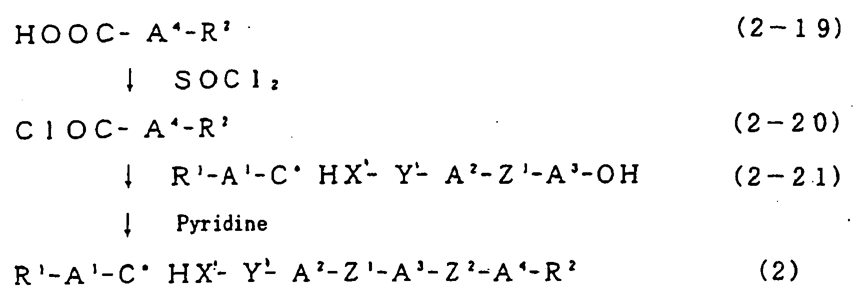

In each of Processes 5, 6, 7 and 8, a corresponding carboxylic acid is subjected to acid chloridation with e.g. thionyl chloride to obtain an acid chloride, which is reacted with phenol or an alcohol in the presence of pyridine to obtain an aimed compound (1).

### [Process 9]

In a case where A² is a non-substituted trans-1,4-cyclohexylene group

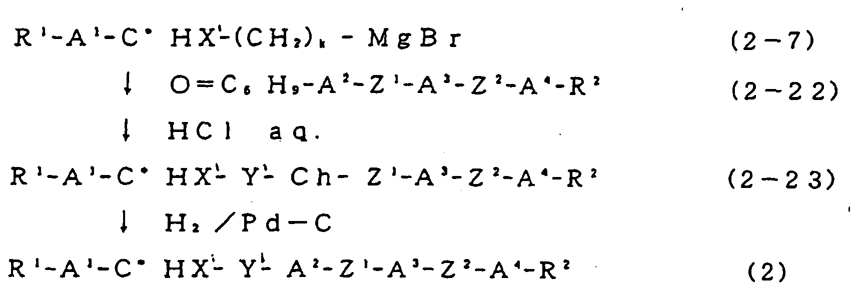

A Grignard reagent (2-7) is reacted with a cyclohexanone derivative (2-22) and refluxed in hydrochloric acid for dehydration to obtain a cyclohexane compound (2-23), which is subjected to hydrogenation in the presence of a palladium carbon catalyst to obtain an aimed compound (2). Ch represents a 1,4-cyclohexenylene group, and O=C₆H₉- represents a 4-oxocyclohexyl group. In each reaction, the optical purity of the optically active compound of each formula is maintained.

The above processes are processes which can maintain the absolute configuration of the material, and thus the material compound may optionally be changed depending upon the absolute configuration of the aimed optically active compound (2). Such production processes are mentioned only as examples, and various production processes may be employed.

### EXAMPLE 2-1

### Preparation of (R)-1-[4-[4-(trans-4-propylcyclohexyl)phenyl]phenyl]-2-phenylpropane

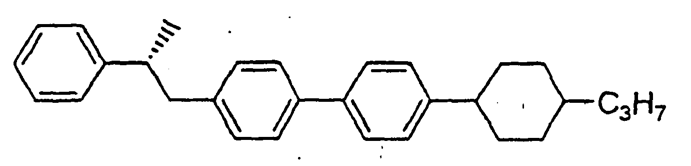

70 ml of tetrahydrofuran was added to 25.3 g (1.04 mol) of magnesium, and a solution having 9.45 g (0.087 mol) of ethyl bromide and 200 g (0.867 mol) of (R)-2-phenyl-1-(4-chlorophenyl)propane dissolved in 250 ml of tetrahydrofuran was dropwise added thereto over a period of 30 minutes at room temperature with stirring, followed by stirring for 6 hours under reflux. After the mixture was cooled to room temperature, 650 ml of tetrahydrofuran was added thereto. The above reaction liquid was dropwise added to a solution having 112 g (0.44 mol) of trimethoxyboron dissolved in 300 ml of tetrahydrofuran over a period of 1 hour at -20°C, followed by stirring for 1 hour. The temperature was raised to 0°C, 700 ml of 3M hydrochloric acid was dropwise added, followed by stirring for 1 hour at the same temperature. After extraction with toluene from the reaction liquid, washing with water and drying were carried out to distill off the solvent. To a 1,2-dimethoxyethane 800 ml solution of the obtained residue and 238 g (0.845 mol) of 1-bromo-4-(trans-4-propylcyclohexyl)benzene, 1160 ml of an aqueous solution of 19.5 g (16.9 mmol) of tetrakistriphenylphosphine palladium and 260 g (2.45 mol) of sodium carbonate was added, followed by stirring for 3 hours under reflux. The mixture was cooled to room temperature, toluene was added thereto for liquid separation, and the obtained organic layer was washed with water and dried, the solvent was distilled off, and recrystallization and purification by silica gel column chromatography were carried out to obtain 240 g of aimed (R)-1-[4-[4-(trans-4-propylcyclohexyl)phenyl]phenyl]-2-phenylpropane. Melting point: 93.8°C, TSI: 130.8°C, MS m/e: 396 (M+)

### EXAMPLE 2-2

### Preparation of (S)-3,5-difluoro-4-cyanophenyl=2,6-difluoro-4-[4-(2-phenylpropyl)phenyl]benzoate

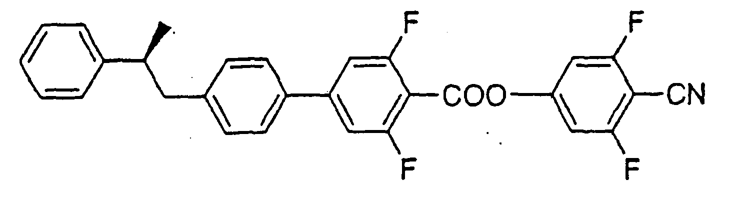

To a toluene 150 ml solution of 37.0 g (0.10 mol) of (S)-2,6-difluoro-4-[4-(2-phenylpropyl)phenyl]benzoylchloride and 15.5 g (0.10 mol) of 2,6-difluoro-4-hydroxybenzonitrile, 9.5 g (0.12 mol) of pyridine was dropwise added over a period of 1 hour at room temperature, followed by stirring at the same temperature overnight. 100 ml of 1M hydrochloric acid was dropwise added to the reaction liquid, followed by stirring for 1 hour at the same temperature. The solution was subjected to liquid separation, and the obtained organic liquid was washed with water and dried, the solvent was distilled off, and recrystallization and purification by silica gel column chromatography were carried out to obtain 40.1 g of aimed (S)-3,5-difluoro-4-cyanophenyl=2,6-difluoro-4-[4-(2-phenylpropyl)phenyl]benzoate. Melting point: 111.5°C, MS m/e: 489 (M+)

### EXAMPLE 2-3

### Preparation of (S)-1-[2,6-difluoro-4-[trans-4-(trans-4-propylcyclohexyl)cyclohexyl]phenyl]-2-phenylpropane

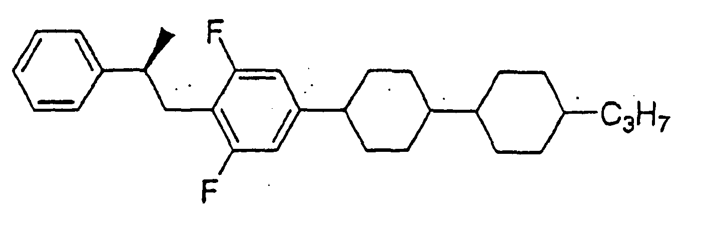

To a tetrahydrofuran 50 ml solution of 10 g (0.031 mol) of 1-[tranp-4-(trans-4-propylcyclohexyl)cyclohexyl]-3,5-difluorobenzene, a n-butyllithium/hexane solution (1.6M, 0.041 mol) was dropwise added over a period of 1 hour at -60°C, followed by stirring for 2 hours at the same temperature. Then, a tetrahydrofuran 30 ml solution of 5.5 g (0.041 mol) of zinc chloride was dropwise added thereto over a period of 2 hours at -60°C, followed by stirring for 1 hour at room temperature. After 0.72 g (0.62 mmol) of tetrakis(triphenylphosphine)palladium was added thereto, a tetrahydrofuran 10 ml solution of 4.7 g (0.041 mol) of (R)-2-phenylpropionyl chloride was dropwise added thereto over a period of 1 hour at room temperature, followed by stirring at room temperature overnight. 43 ml of 1M hydrochloric acid was dropwise added to the reaction solution at room temperature, followed by stirring at the same temperature for 1 hour. After extraction with toluene from the solution, washing with water, drying, distillation of the solvent and recrystallization were carried out to obtain 4.1 g of (R)-1-[2,6-difluoro-4-[trans-4-(trans-4-propylcyclohexyl)cyclohexyl]phenyl]-2-phenyl-l-propanone.

Then, 5 ml of trifluoroacetic acid and 2.6 g (23 mmol) of triethylsilane were added to a 1,2-dichloroethane 8 ml solution of 4.1 g (9.1 mmol) of (R)-1-[2,6-difluoro-4-[trans-4-(trans-4-propylcyclohexyl)cyclohexyl]phenyl]-2-phenyl-1-propanone at room temperature, followed by stirring at 60°C for 10 hours. This reaction liquid was poured into 200 ml of a 5% sodium hydroxide solution, and after extraction with toluene, washing with water, drying, distillation of the solvent, recrystallization and purification by silica gel column chromatography were carried out to obtain 2.5 g of aimed (S)-1-[2,6-difluoro-4-[trans-4-(trans-4-propylcyclohexyl)cyclohexyl]phenyl]-2-phenylpropane. Melting point: 93.7°C, MS m/e: 438 (M+)

The following compounds were obtained by a similar process.

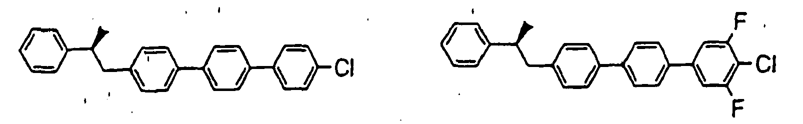

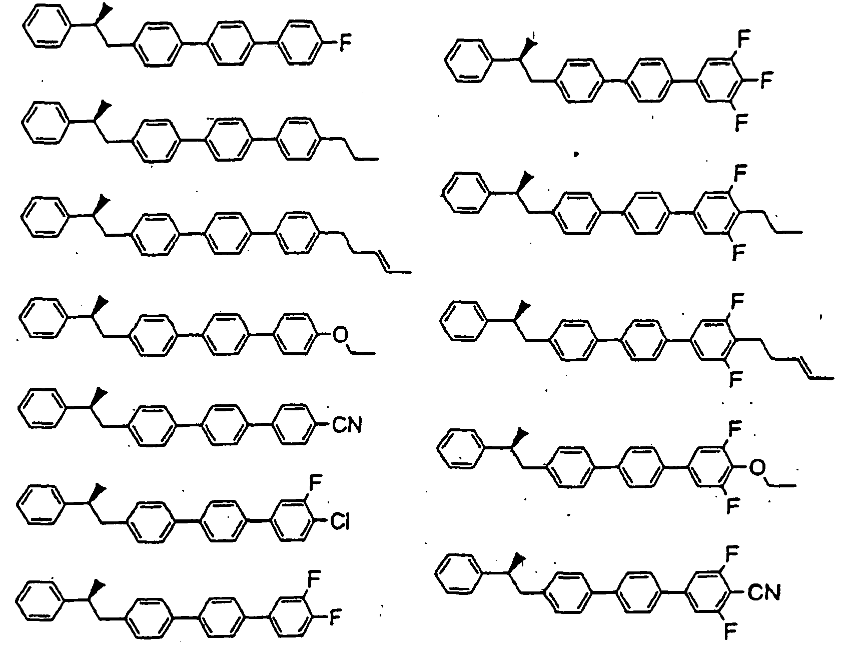

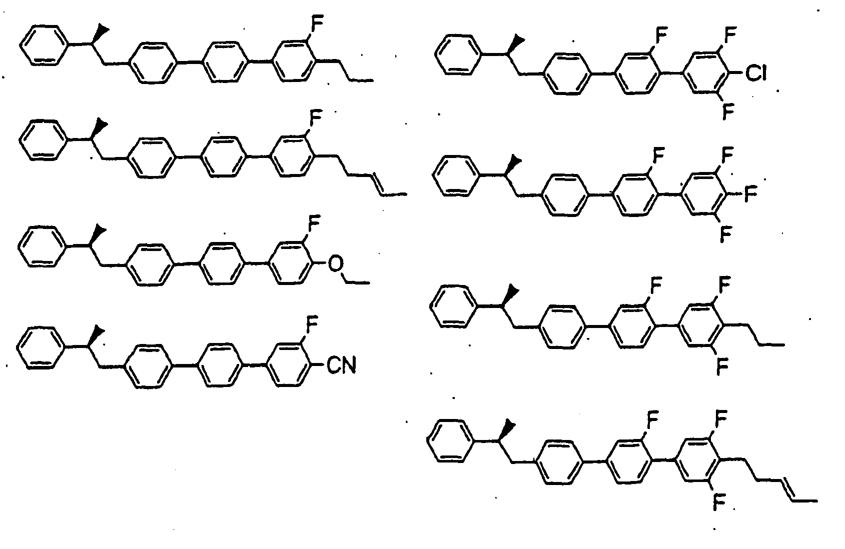

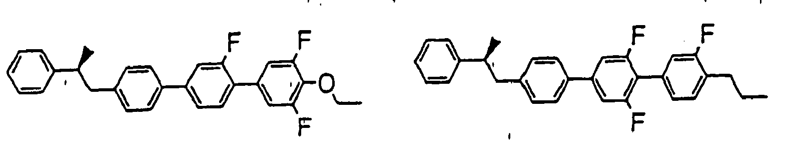

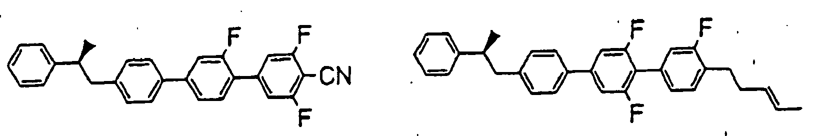

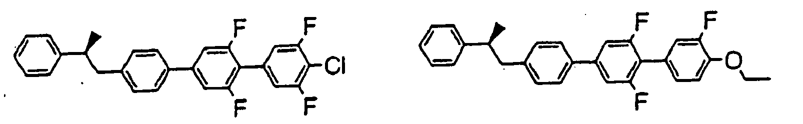

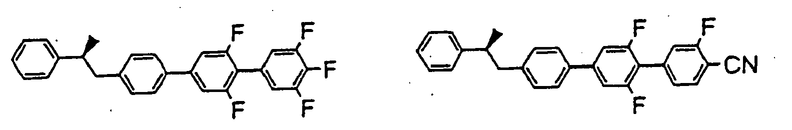

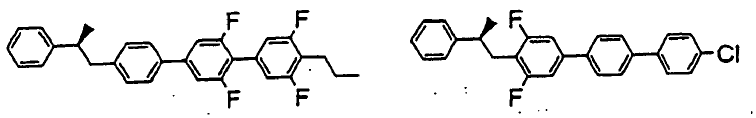

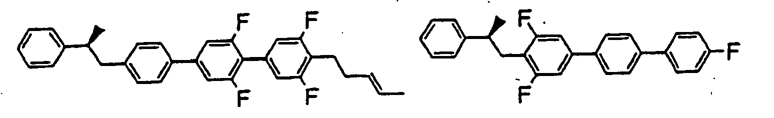

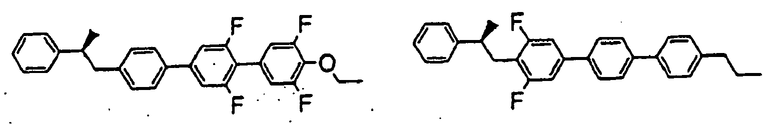

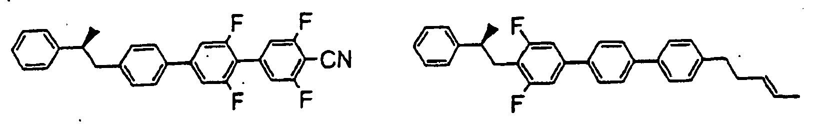

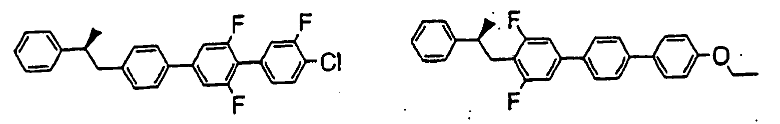

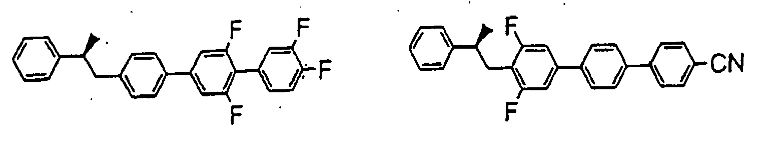

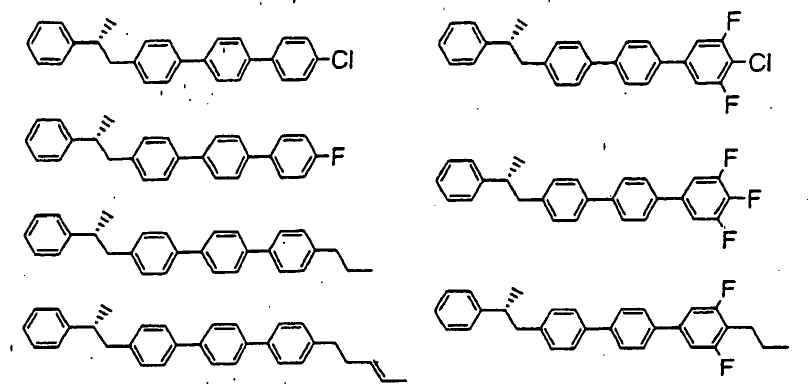

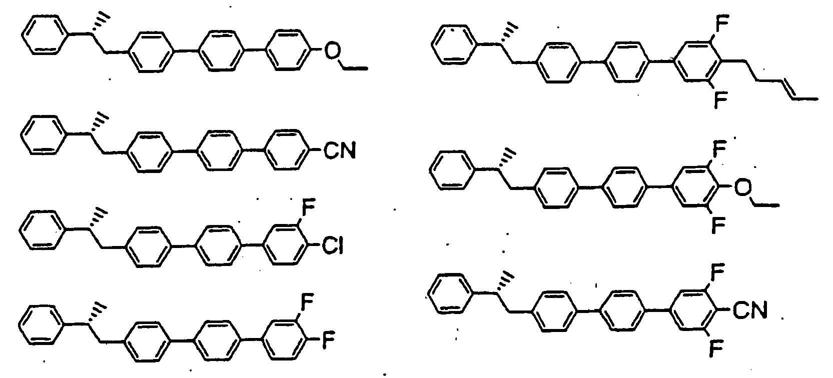

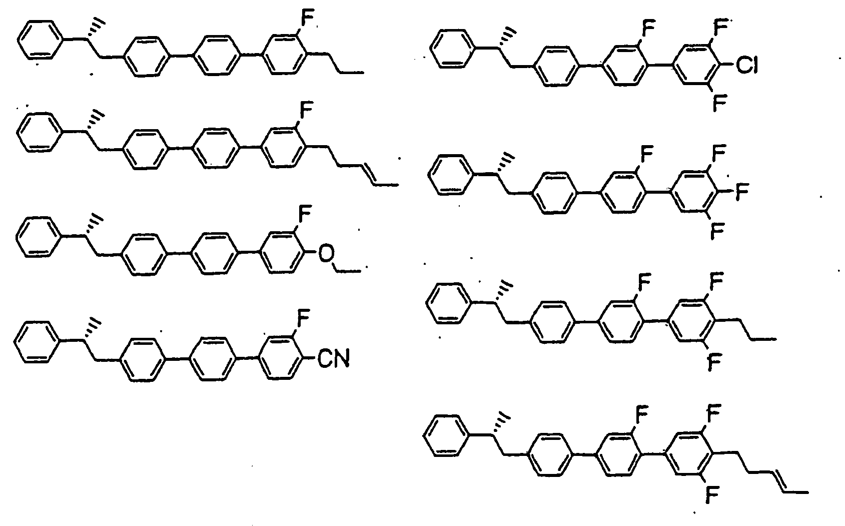

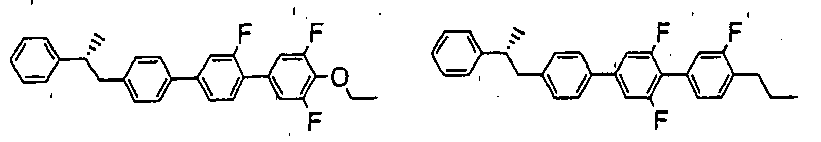

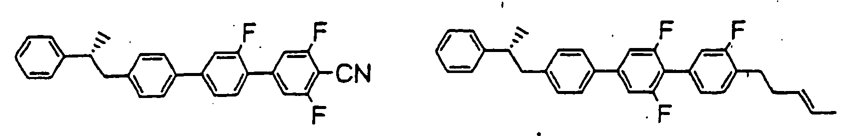

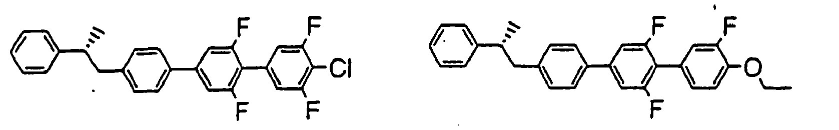

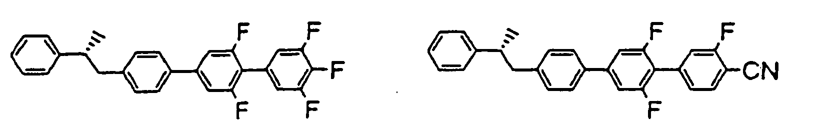

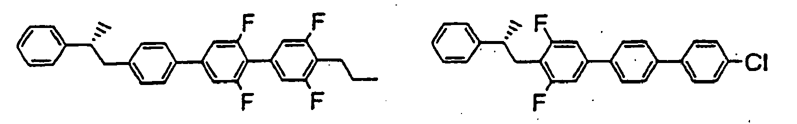

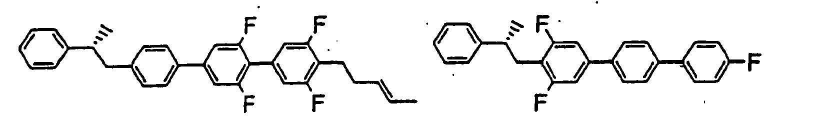

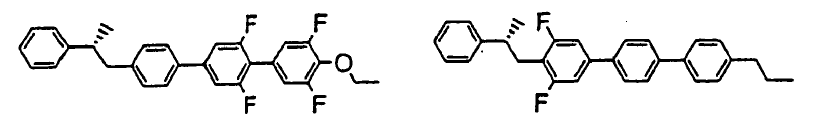

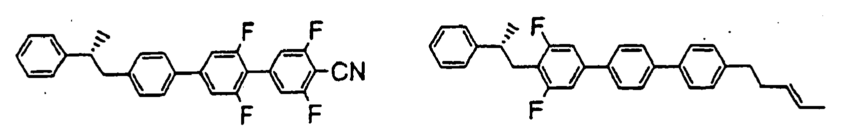

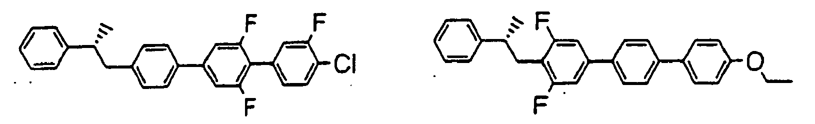

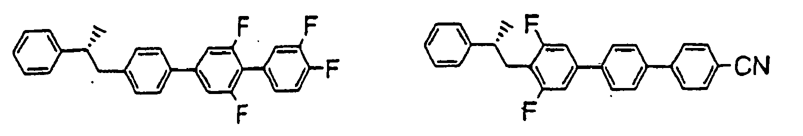

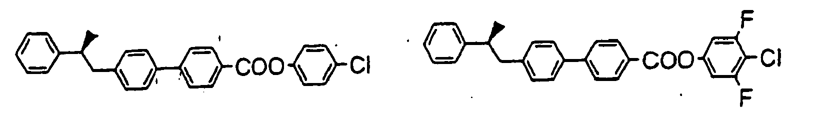

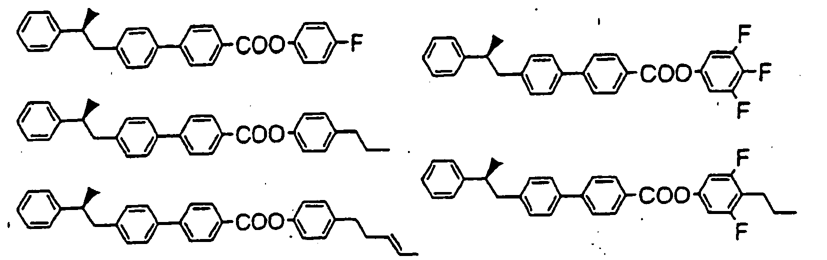

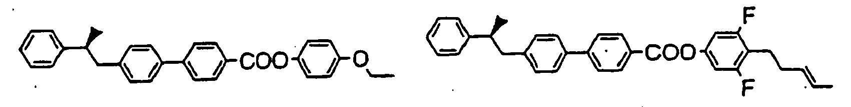

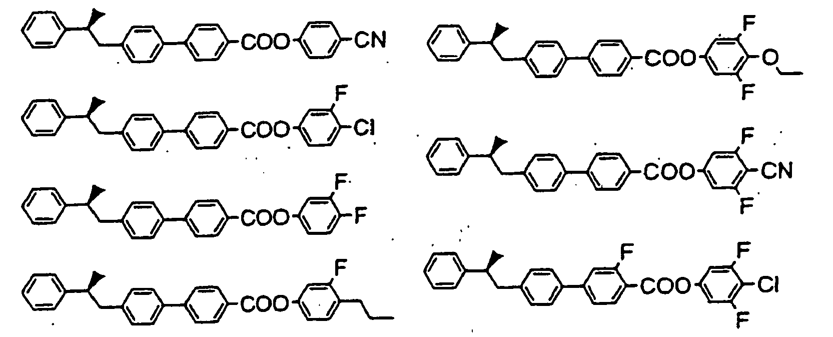

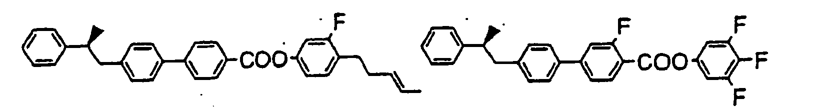

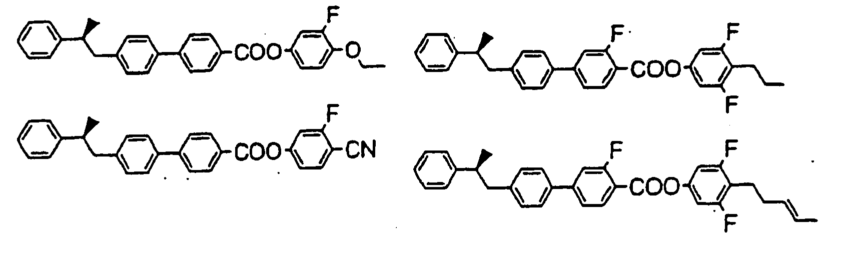

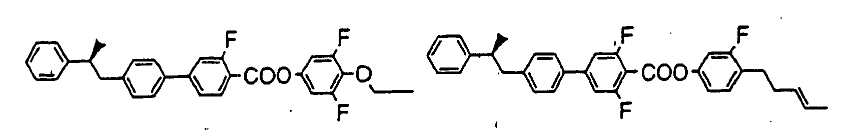

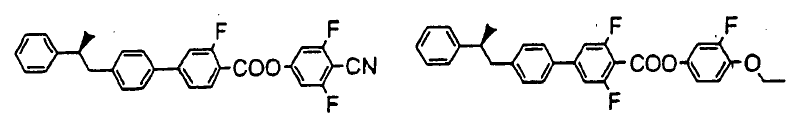

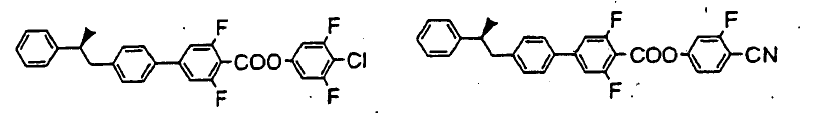

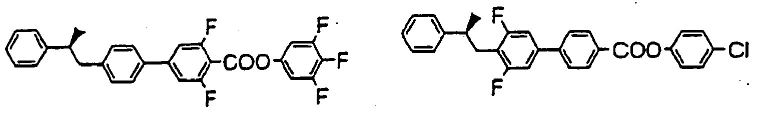

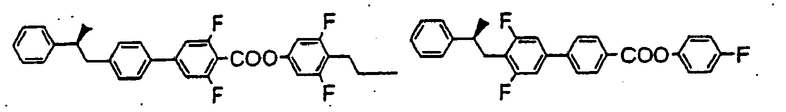

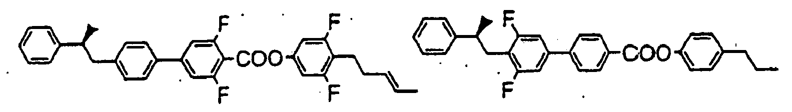

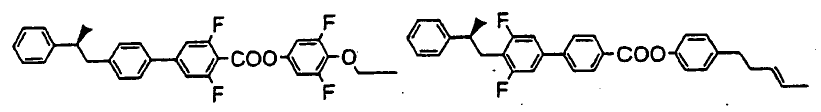

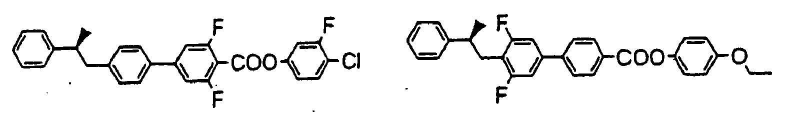

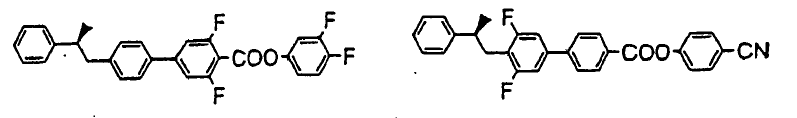

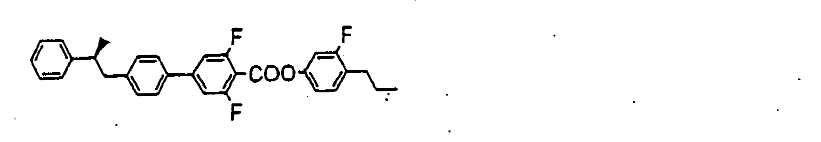

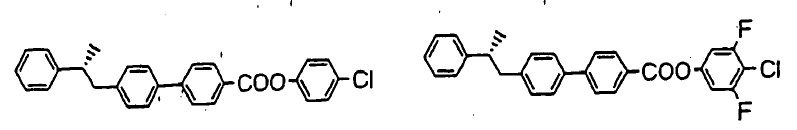

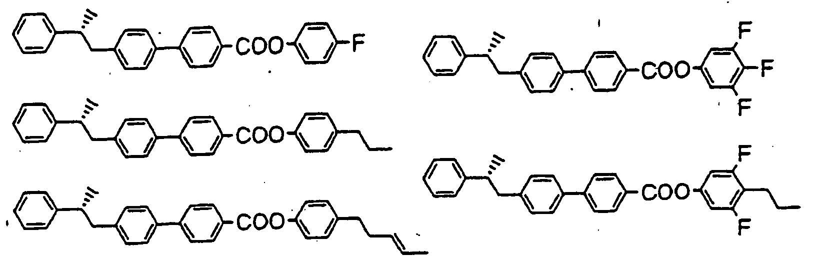

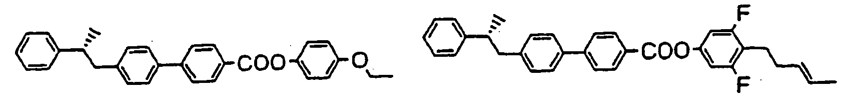

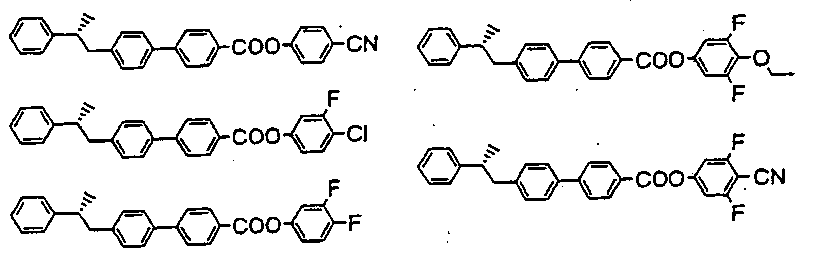

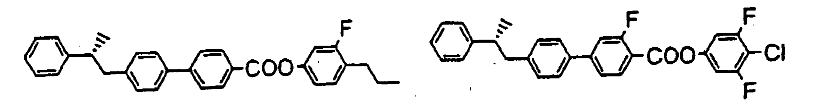

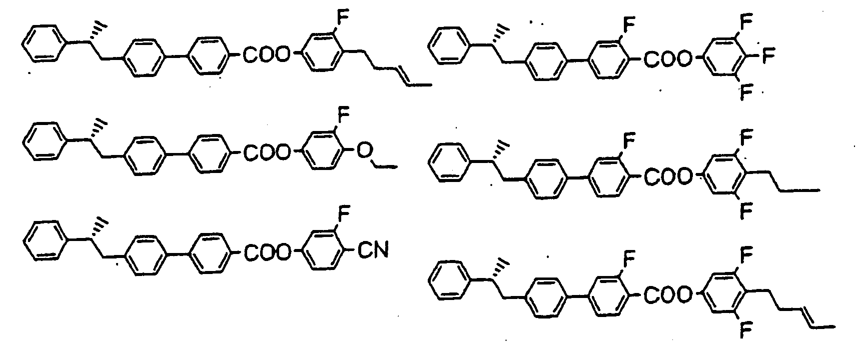

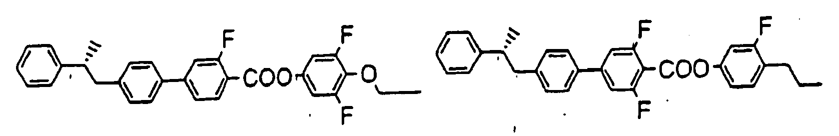

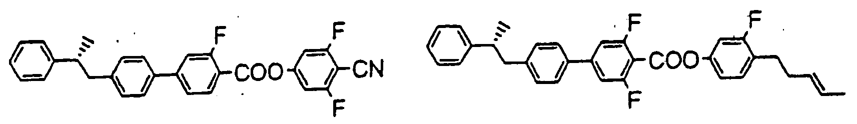

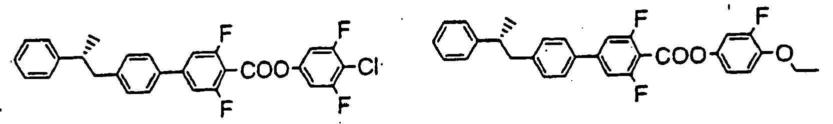

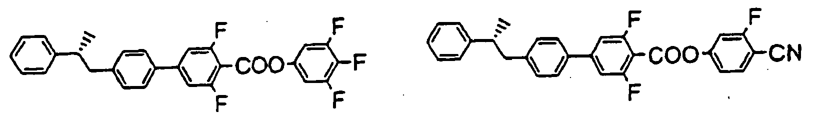

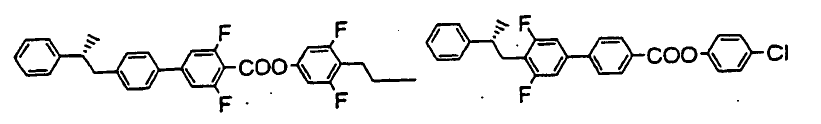

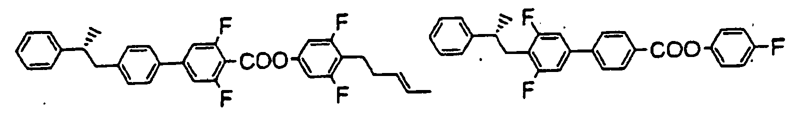

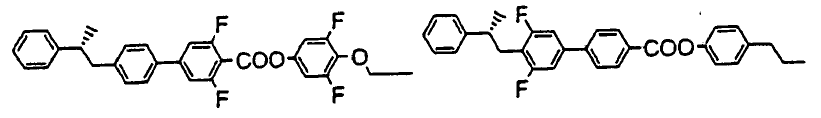

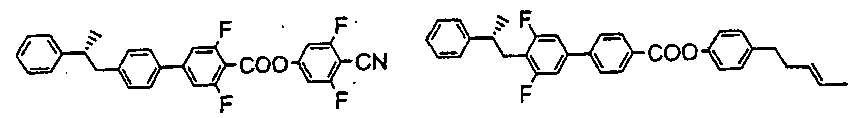

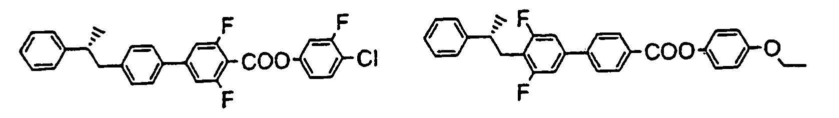

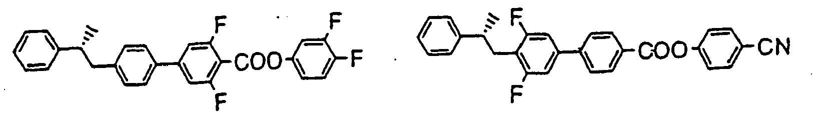

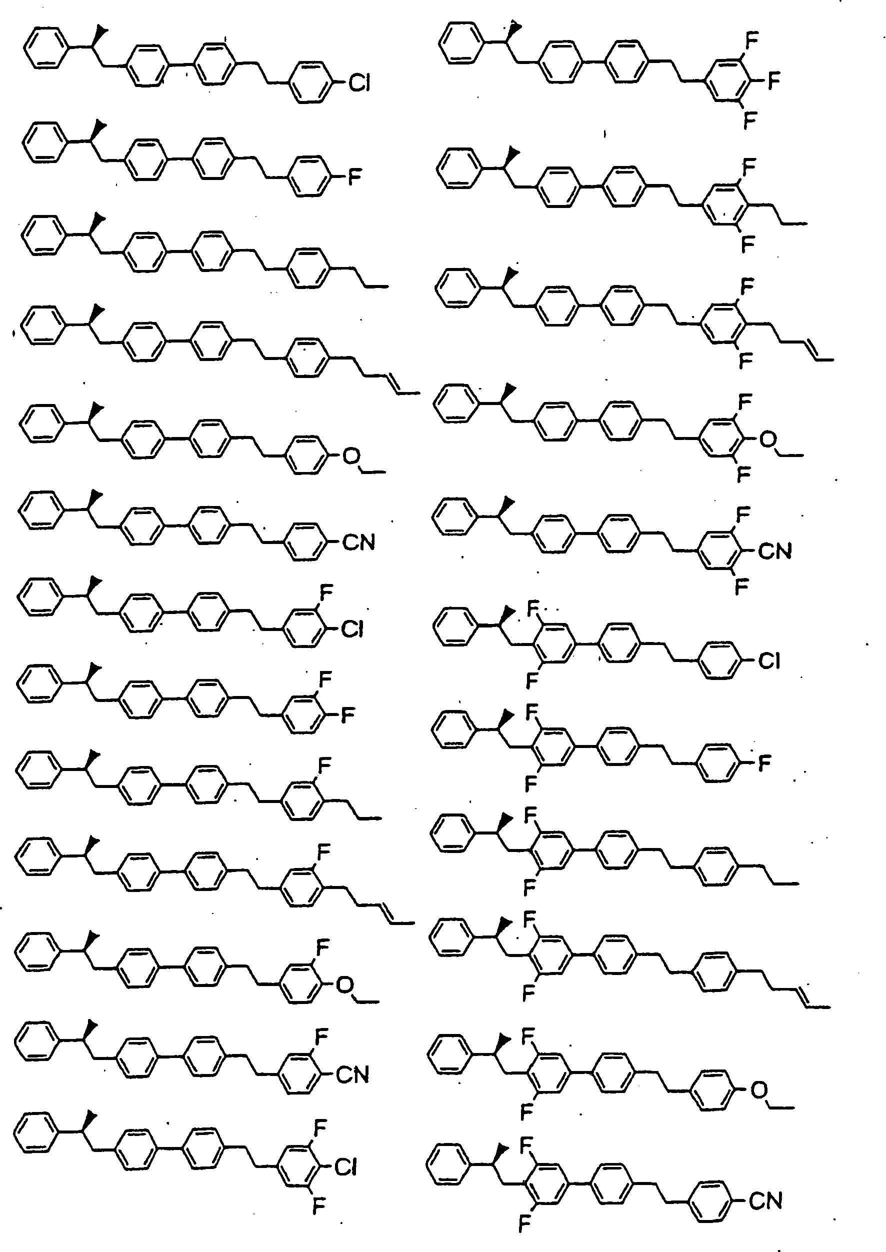

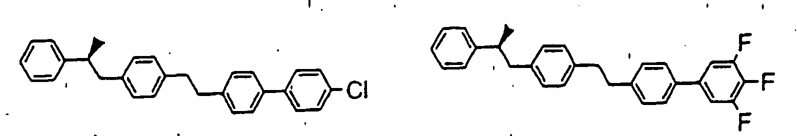

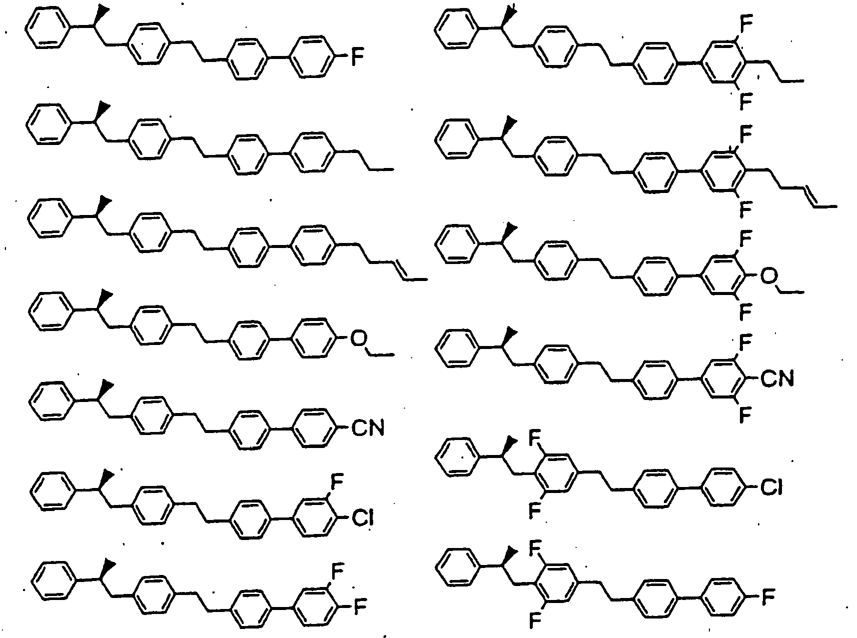

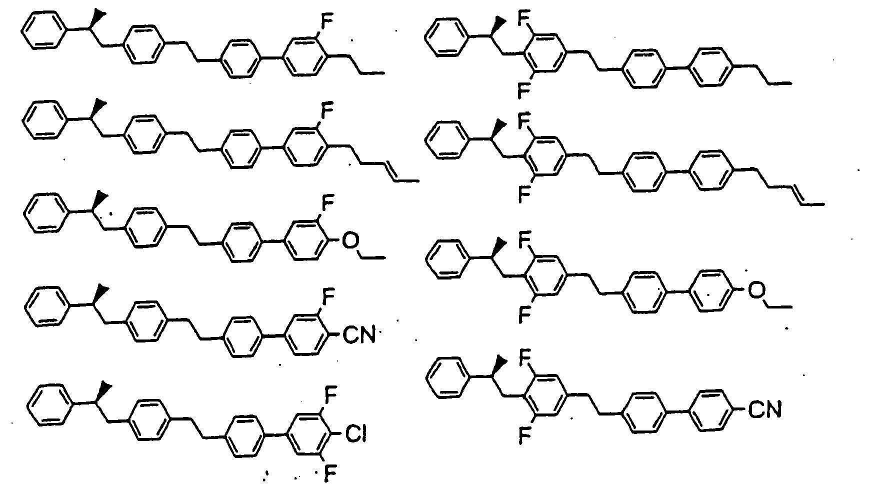

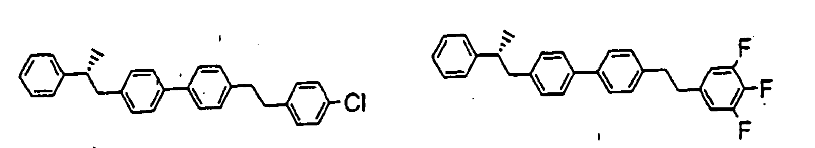

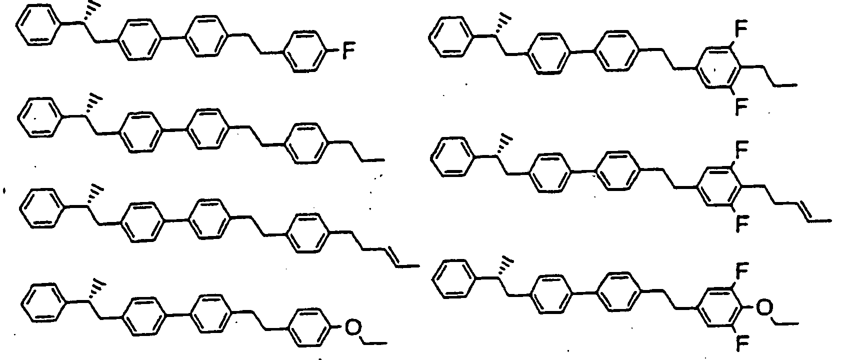

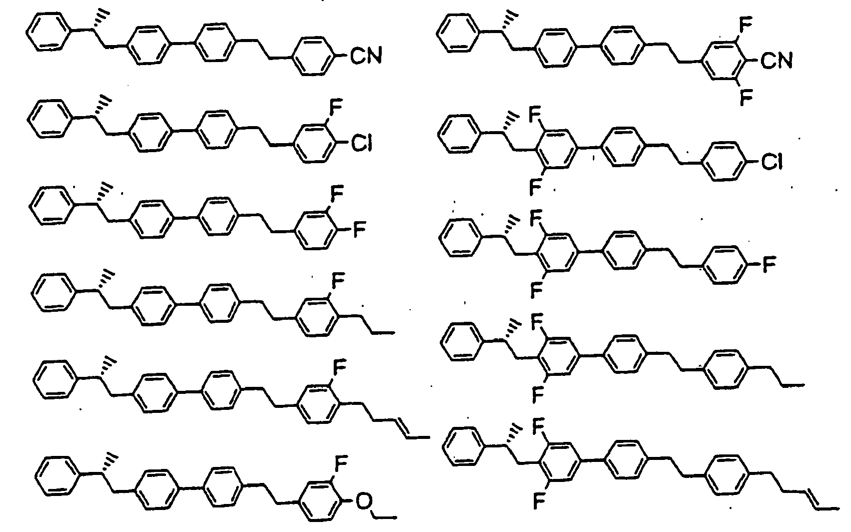

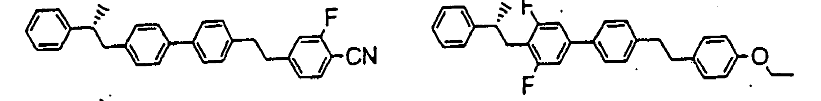

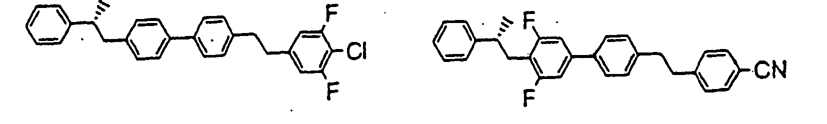

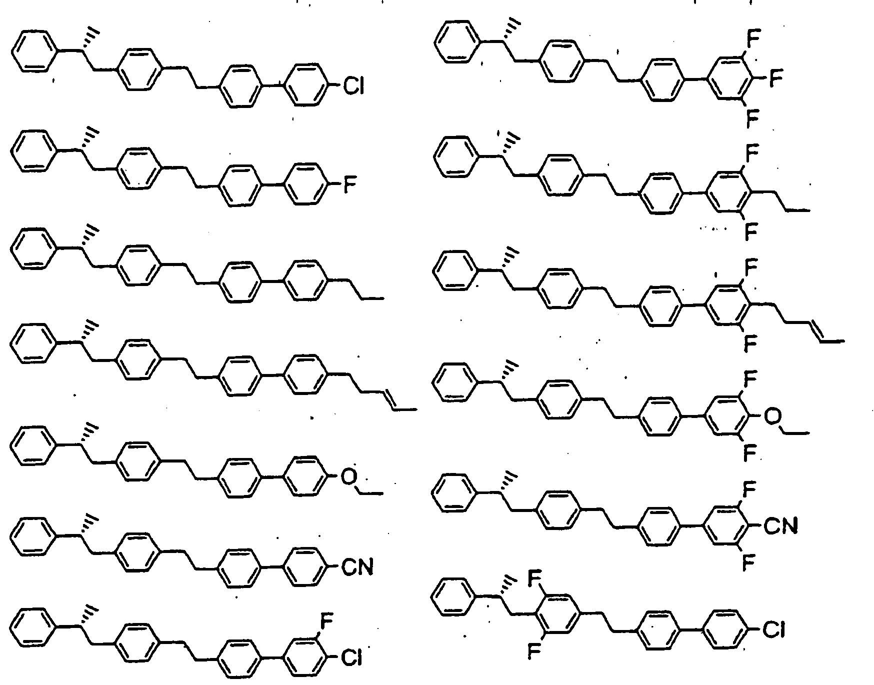

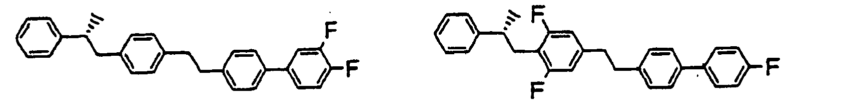

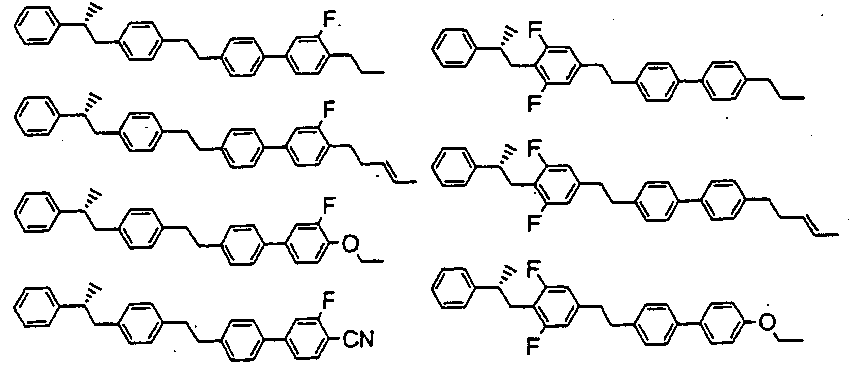

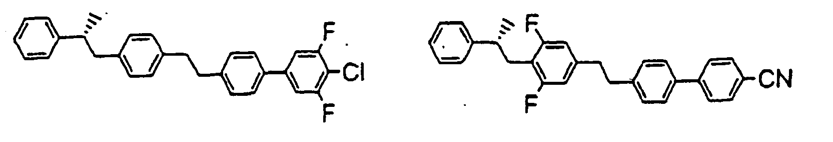

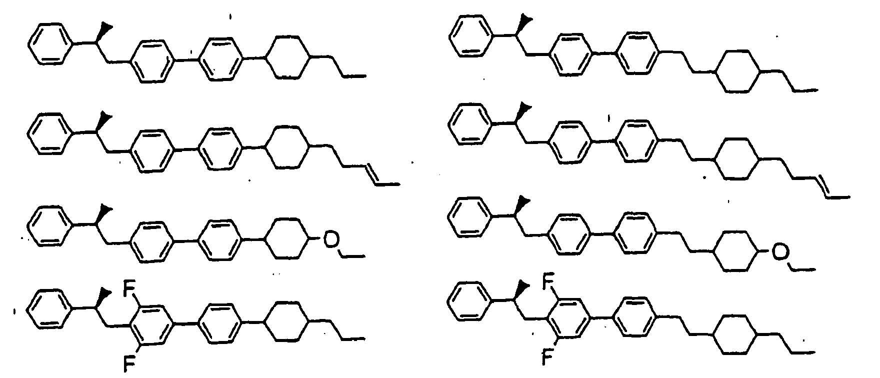

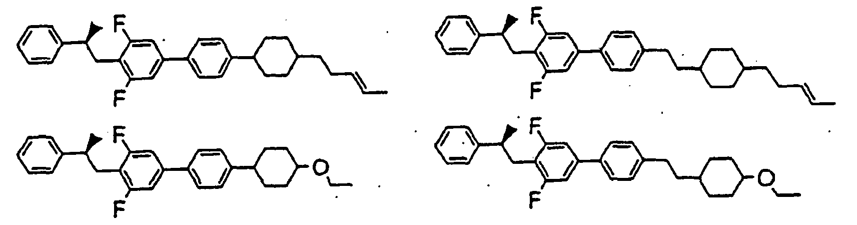

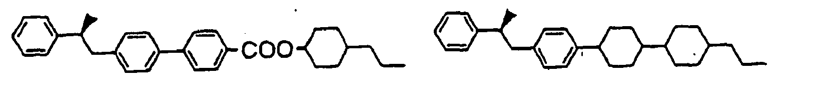

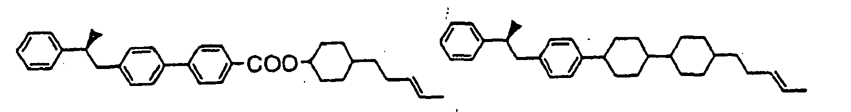

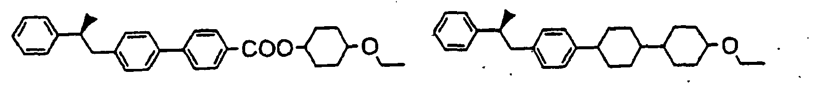

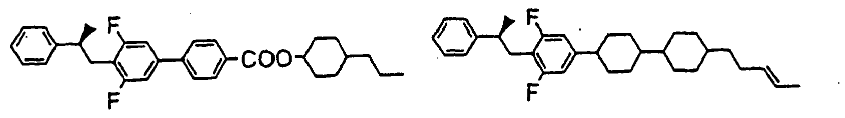

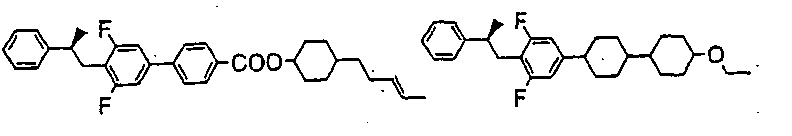

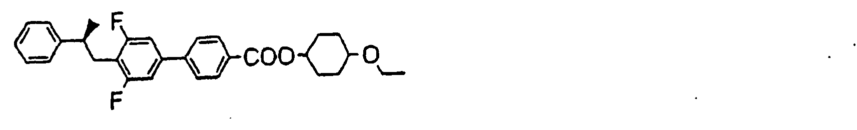

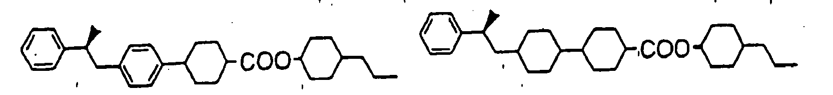

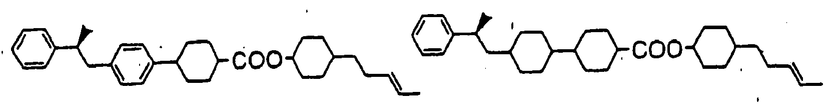

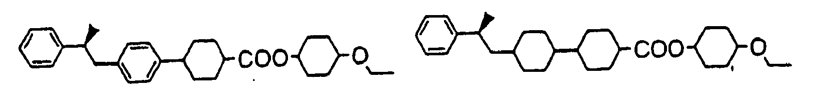

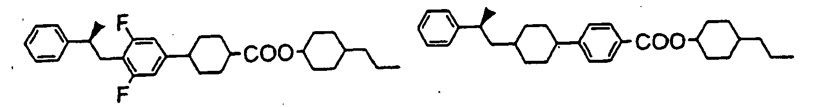

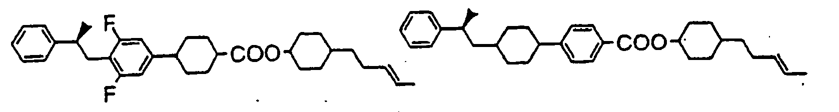

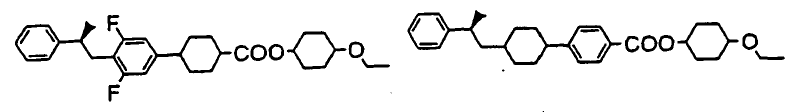

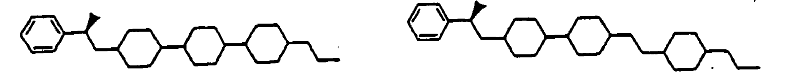

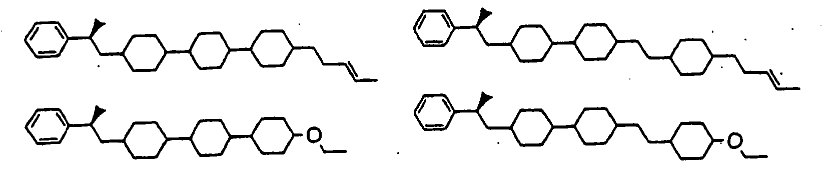

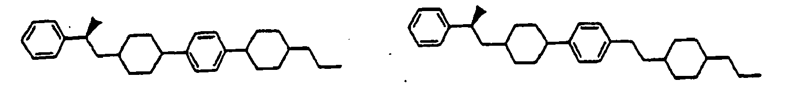

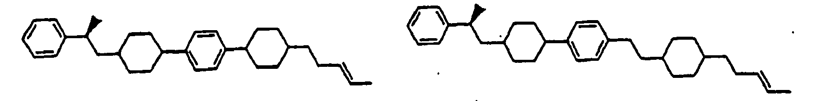

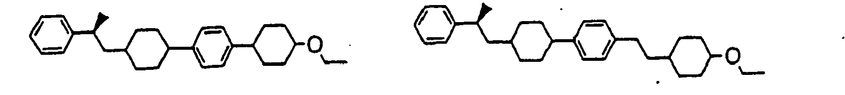

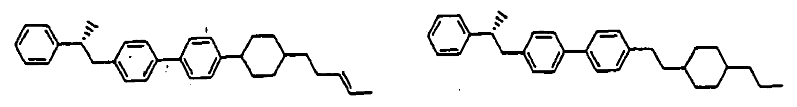

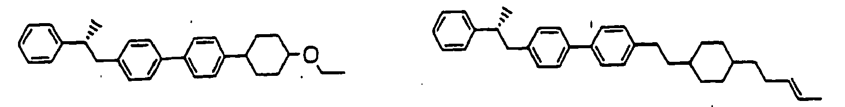

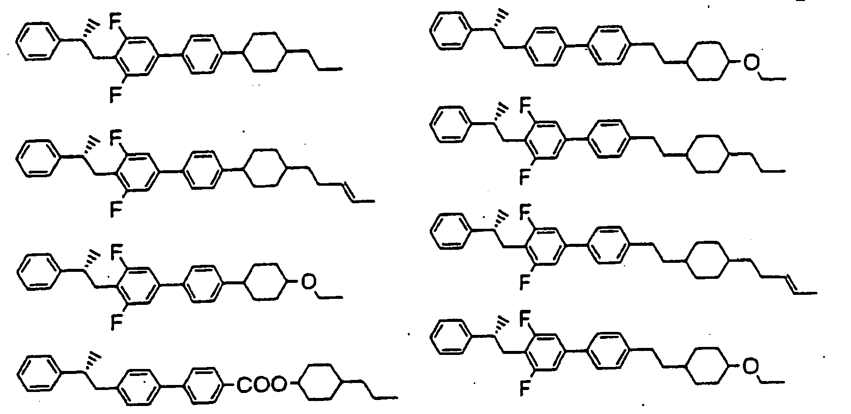

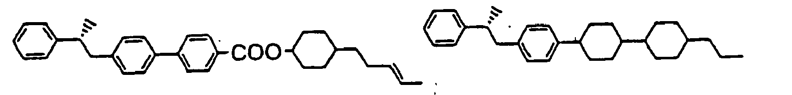

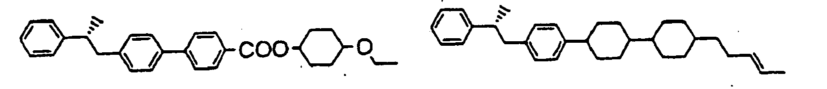

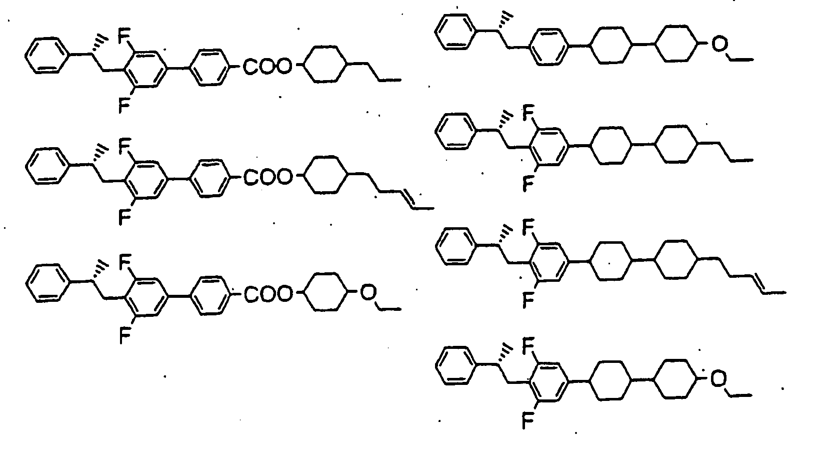

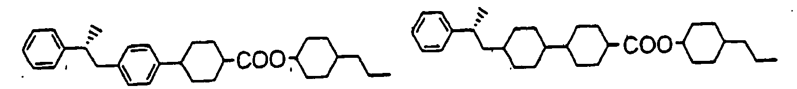

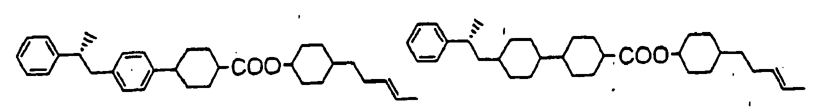

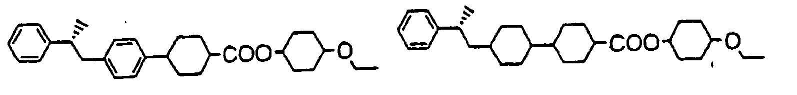

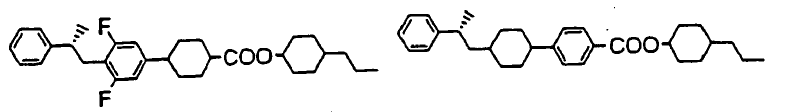

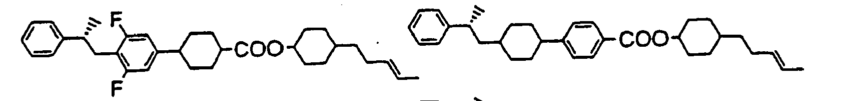

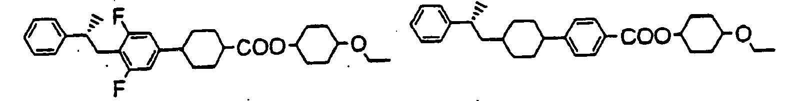

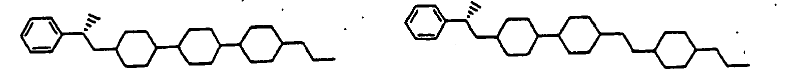

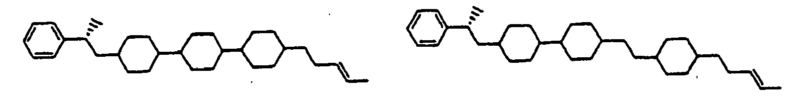

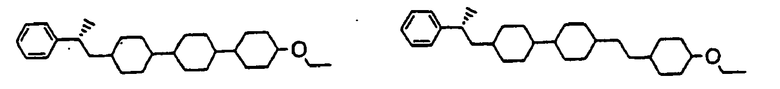

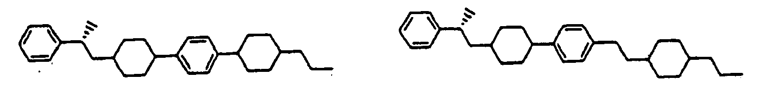

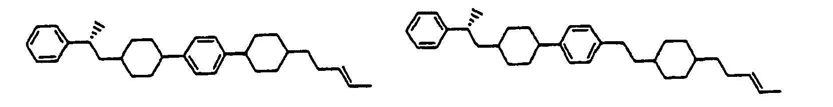

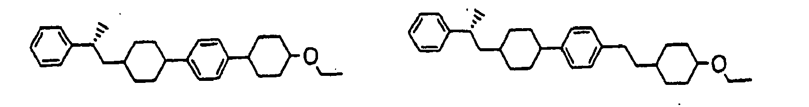

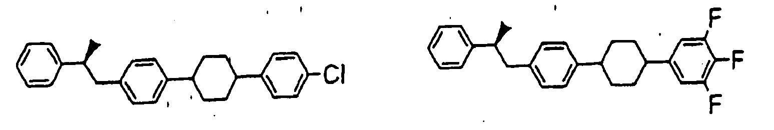

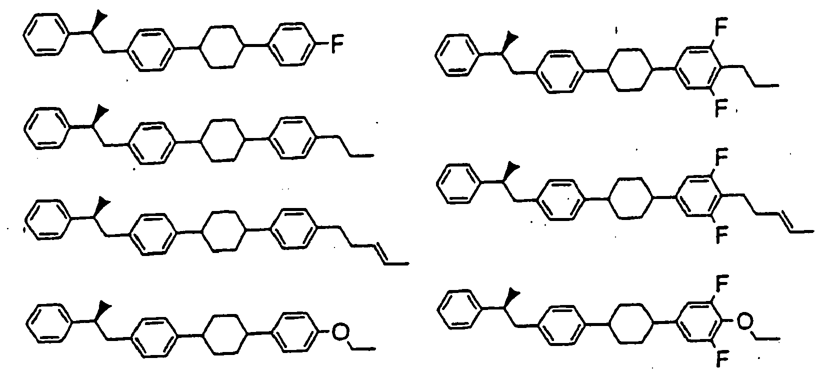

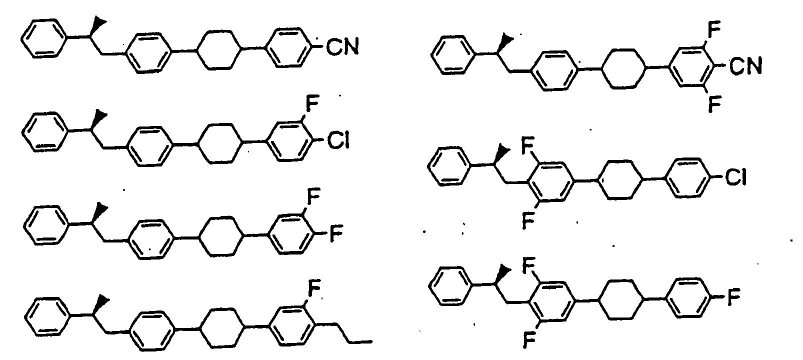

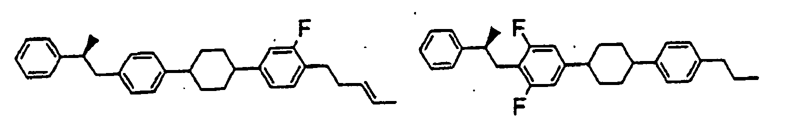

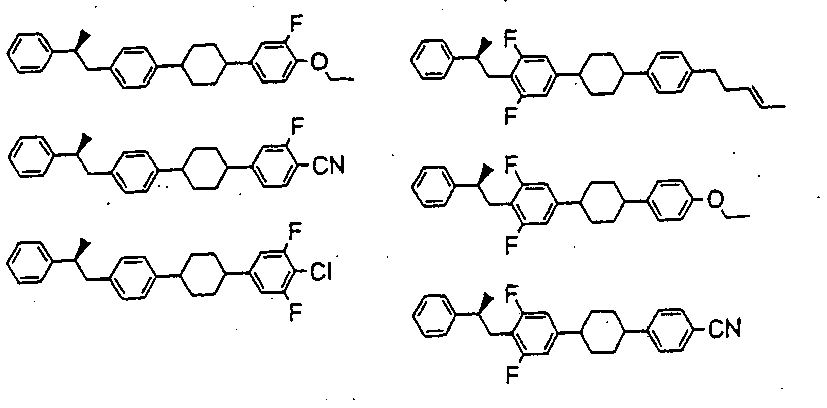

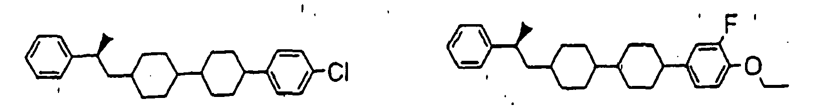

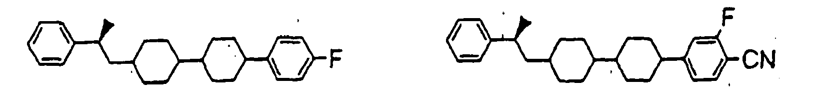

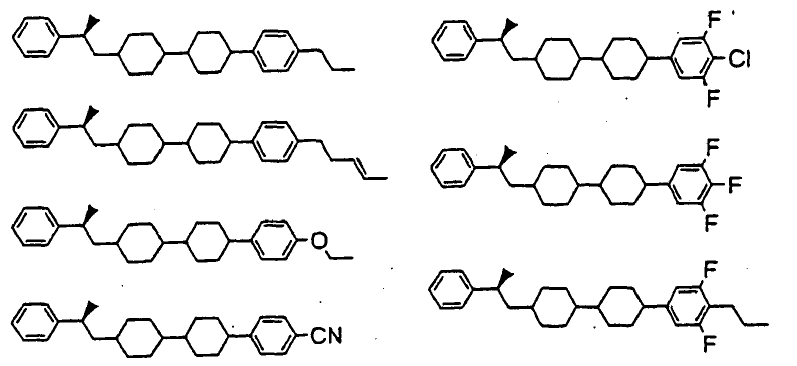

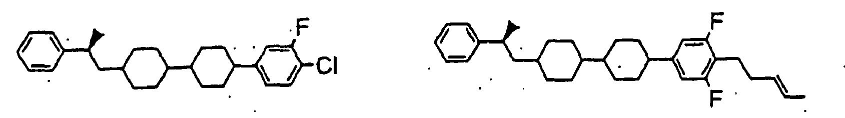

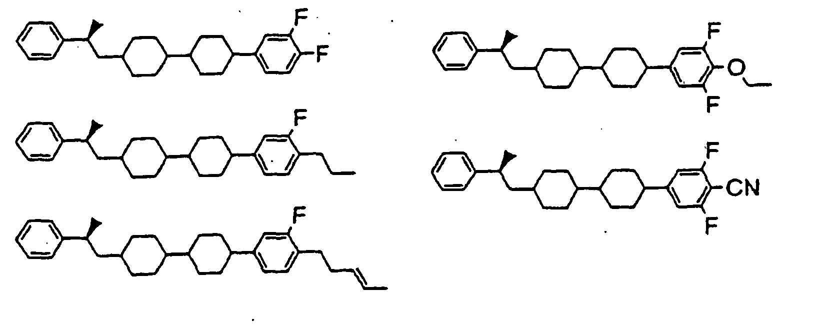

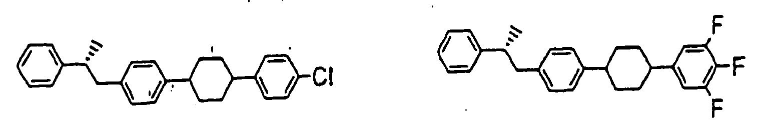

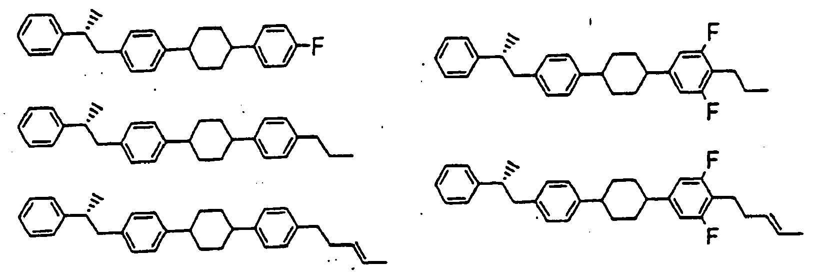

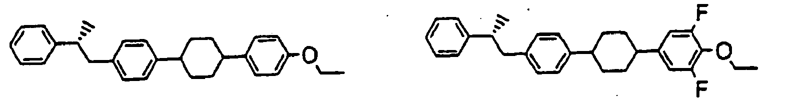

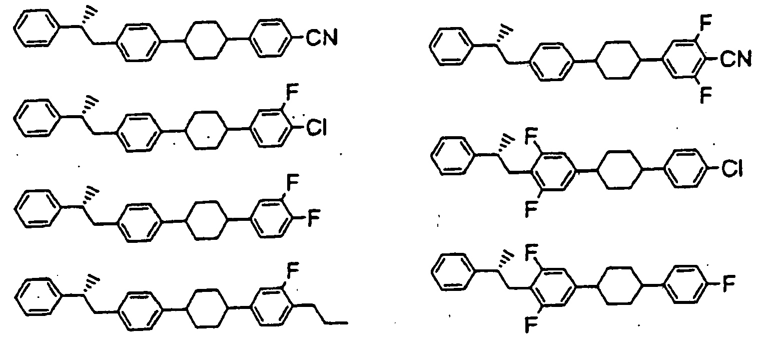

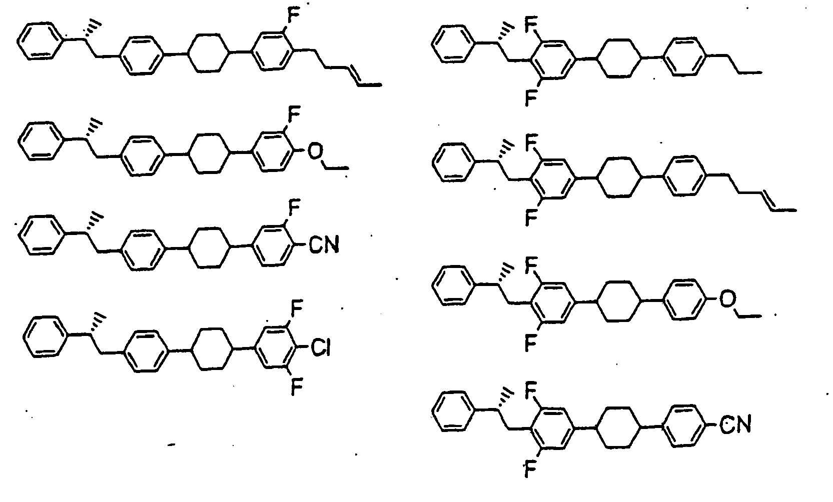

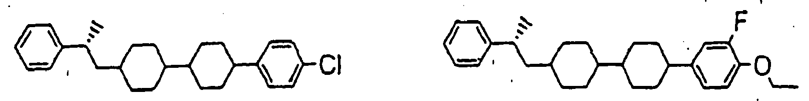

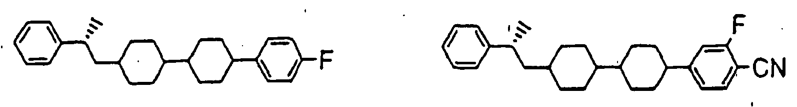

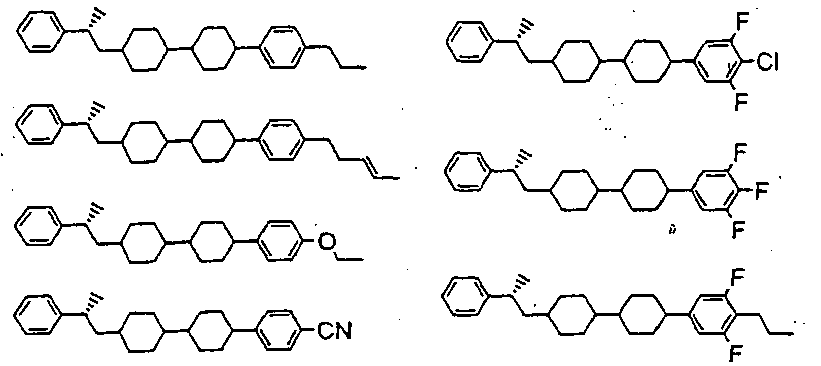

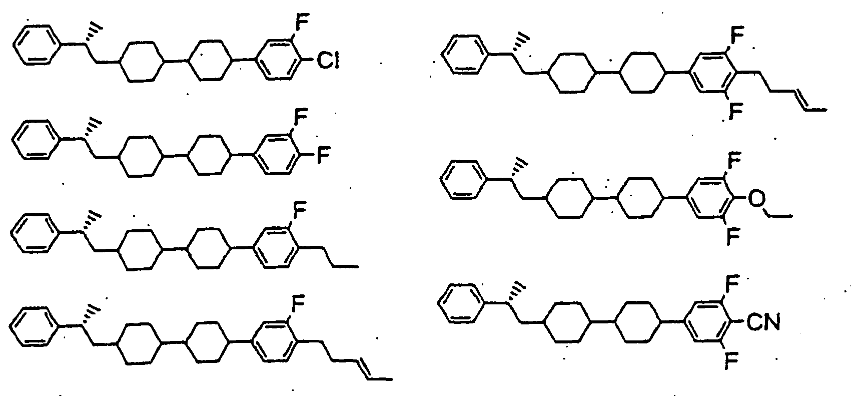

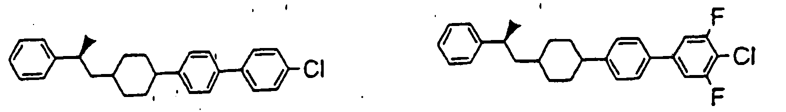

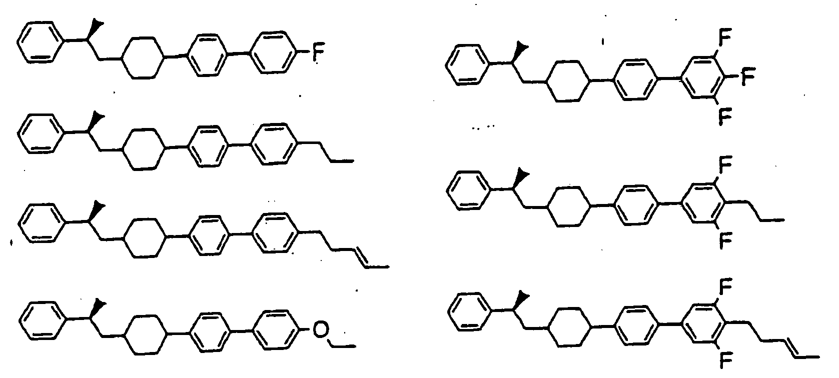

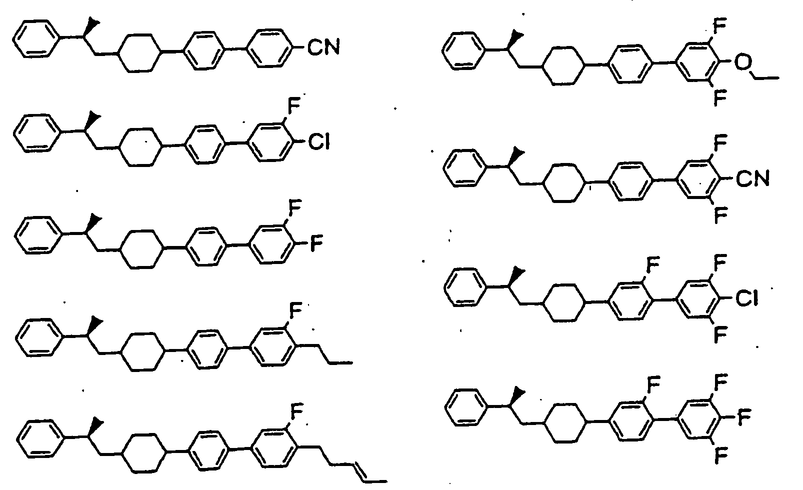

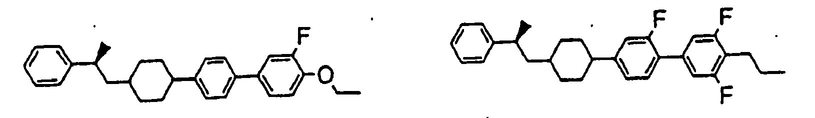

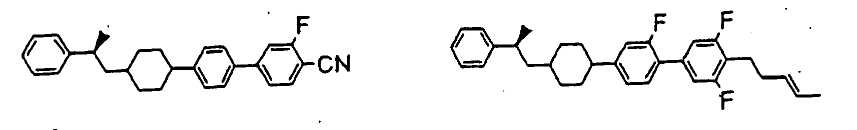

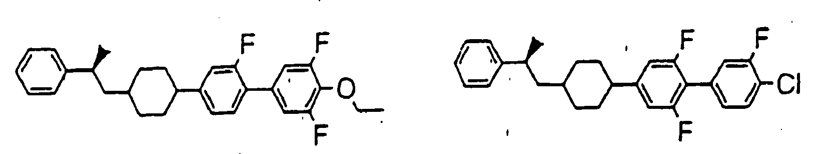

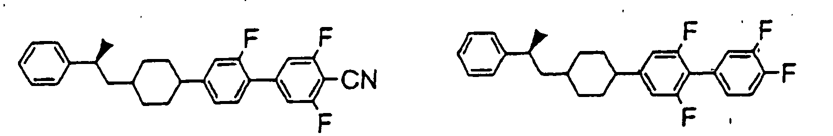

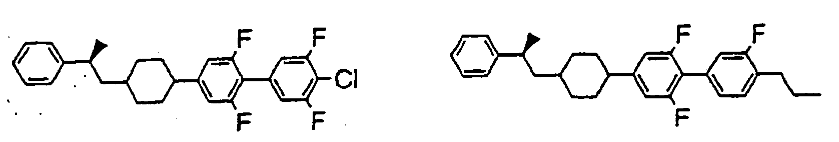

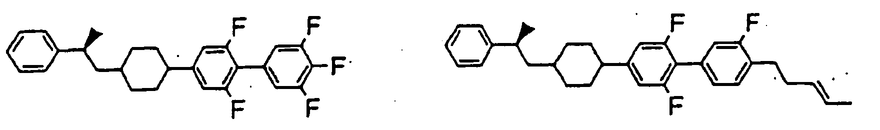

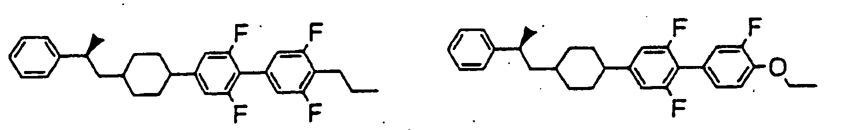

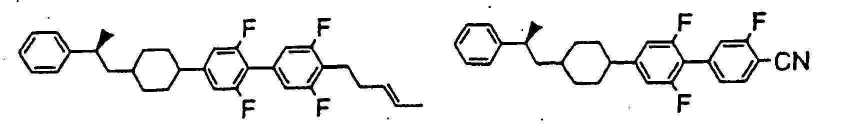

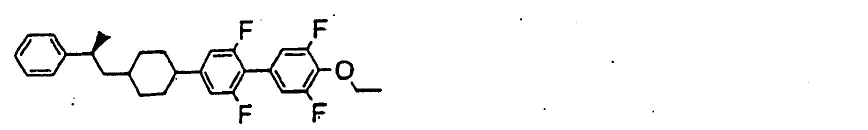

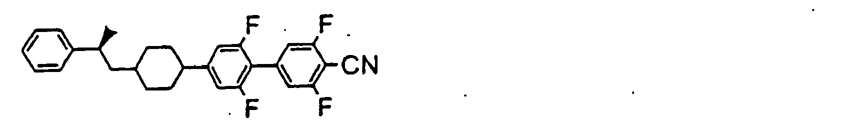

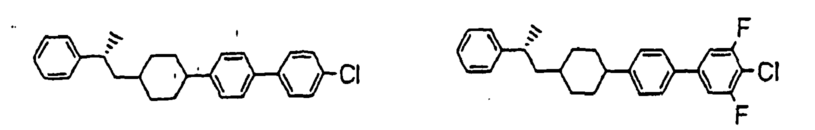

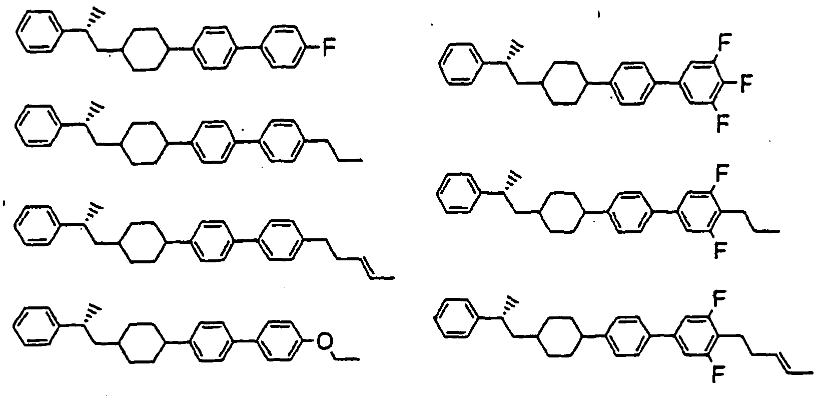

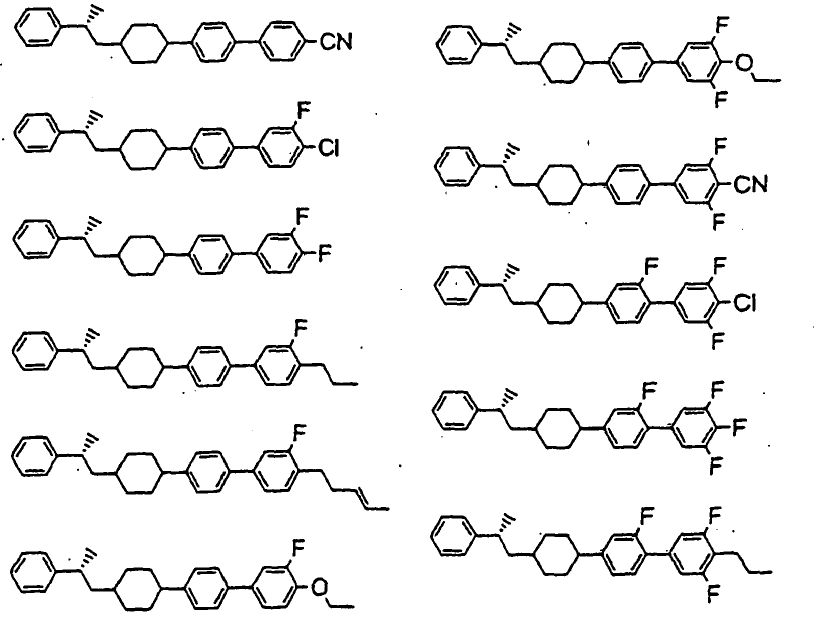

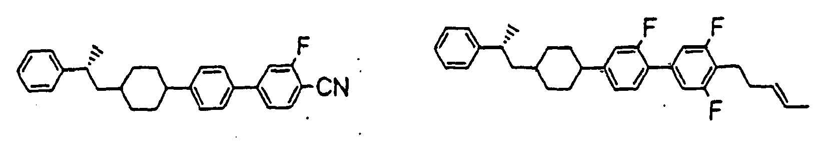

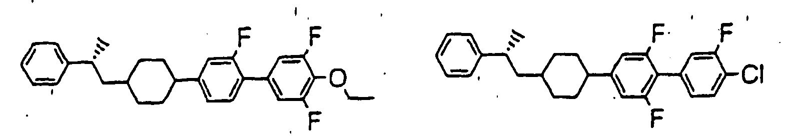

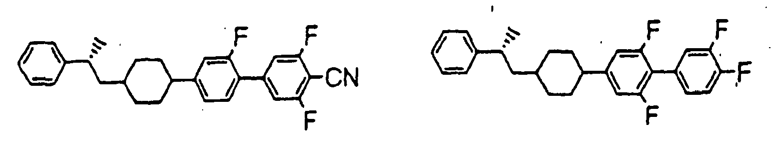

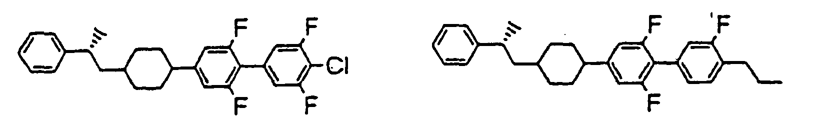

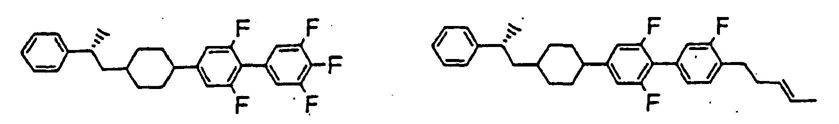

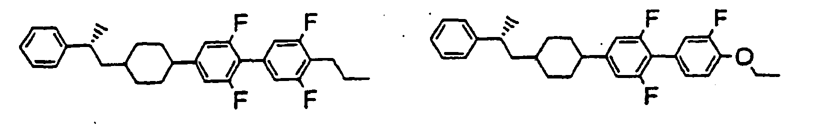

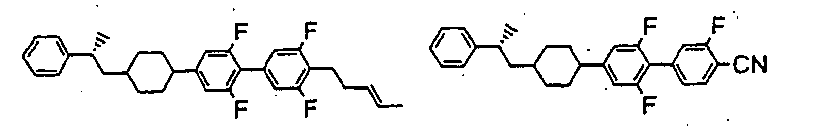

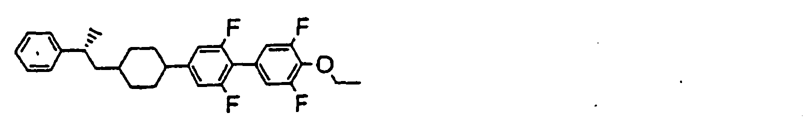

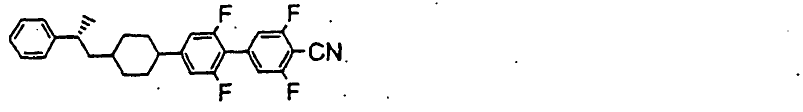

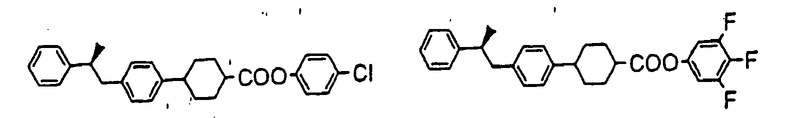

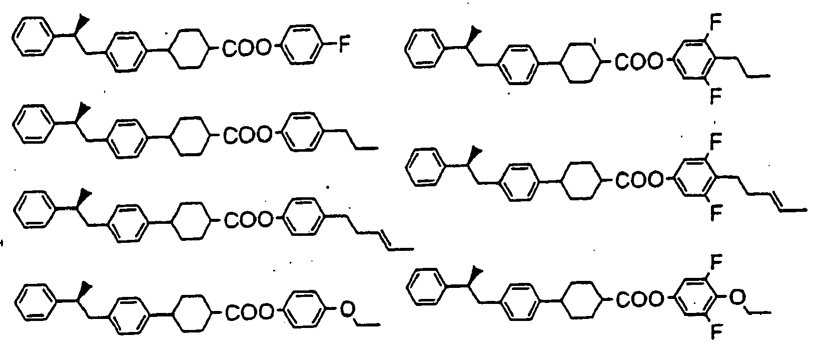

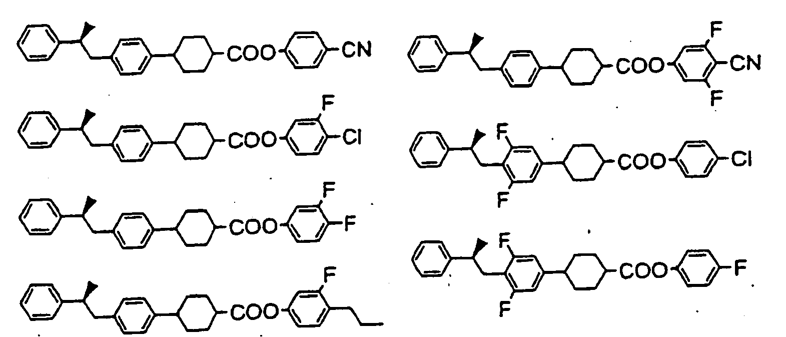

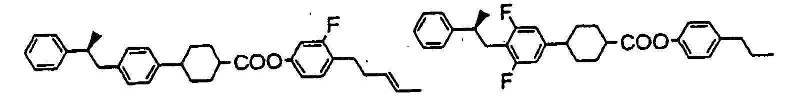

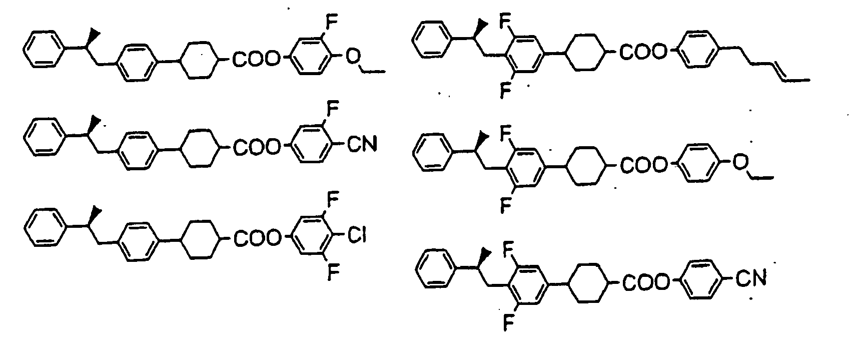

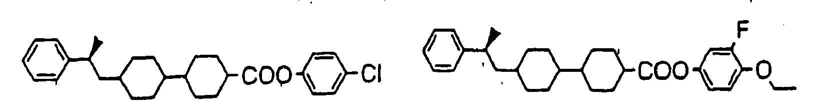

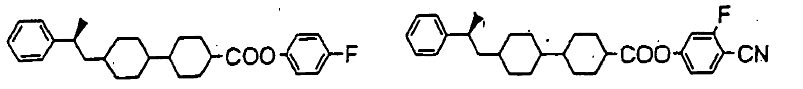

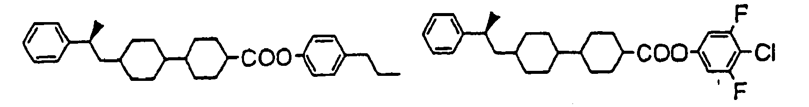

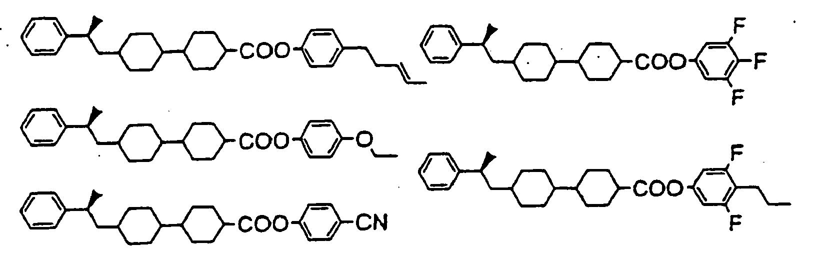

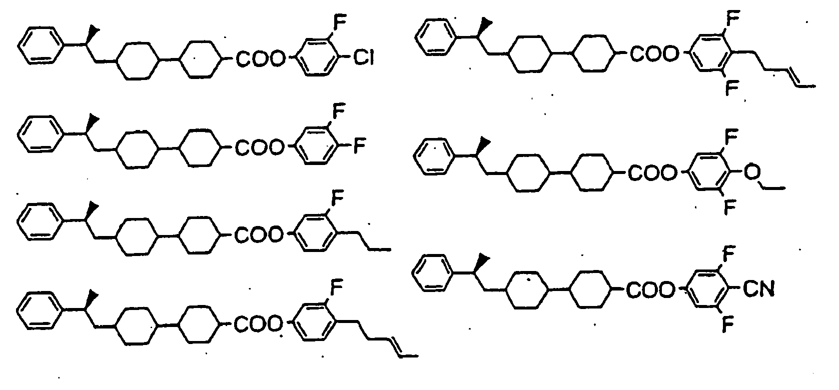

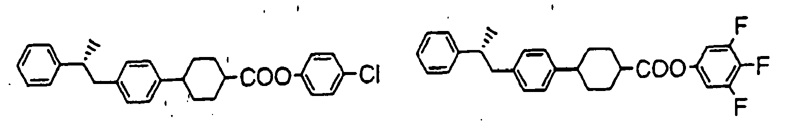

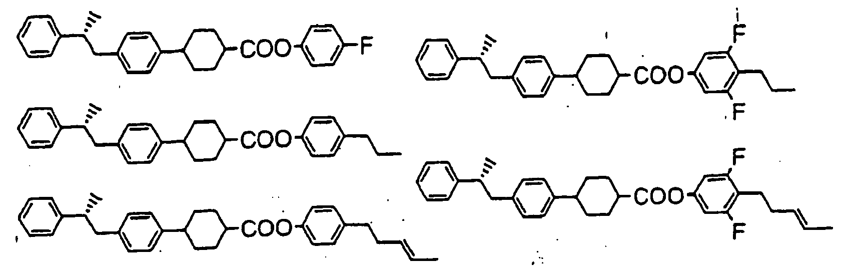

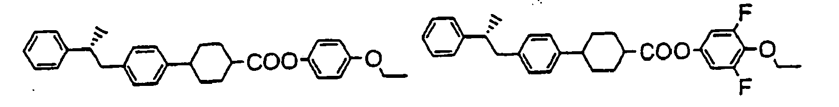

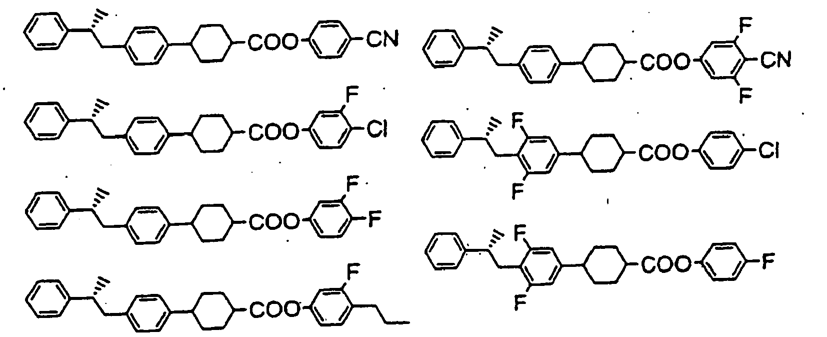

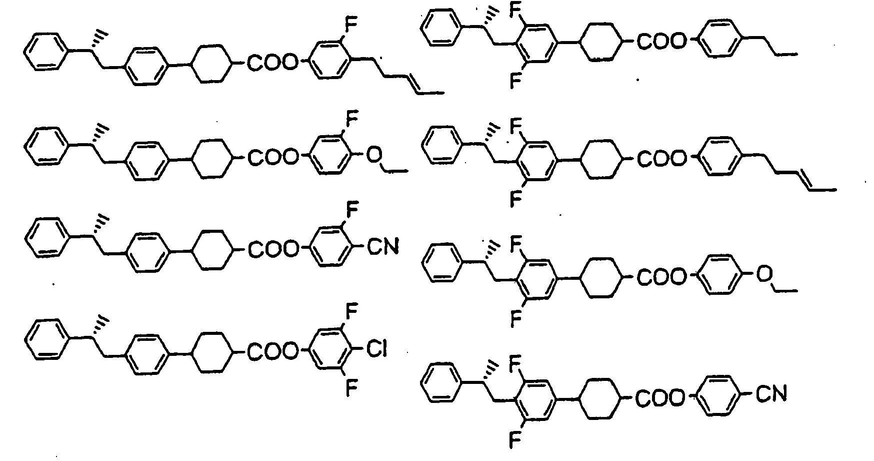

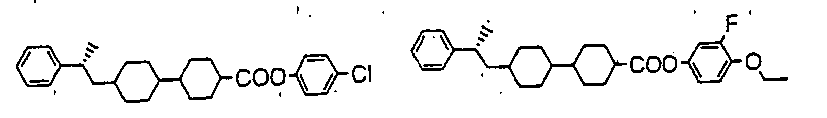

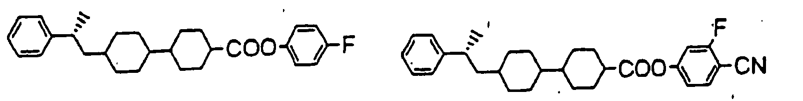

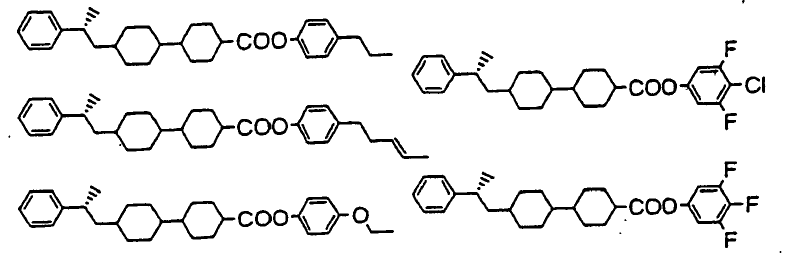

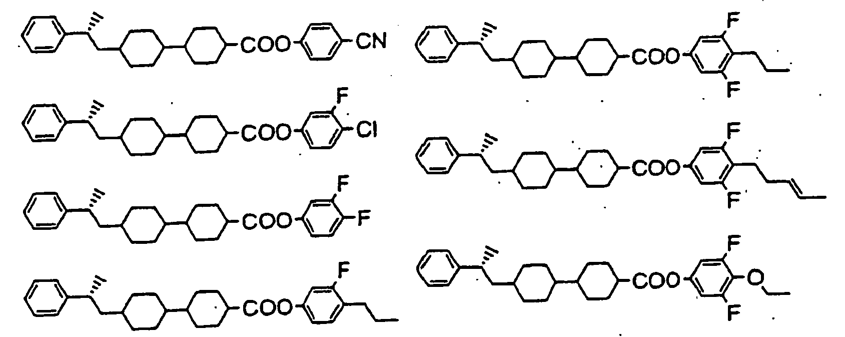

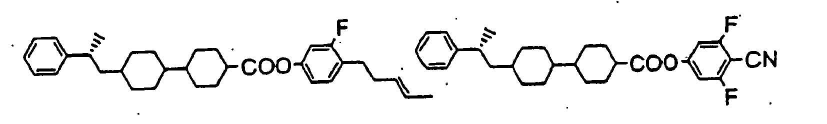

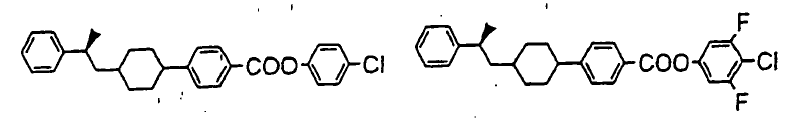

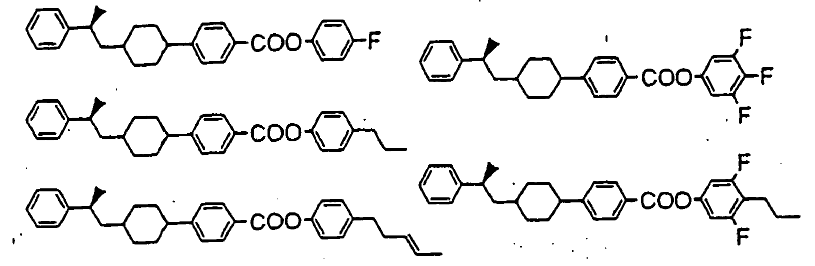

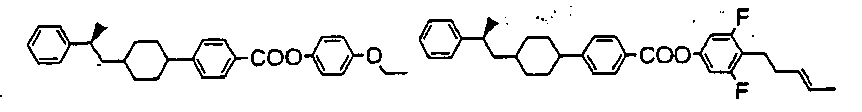

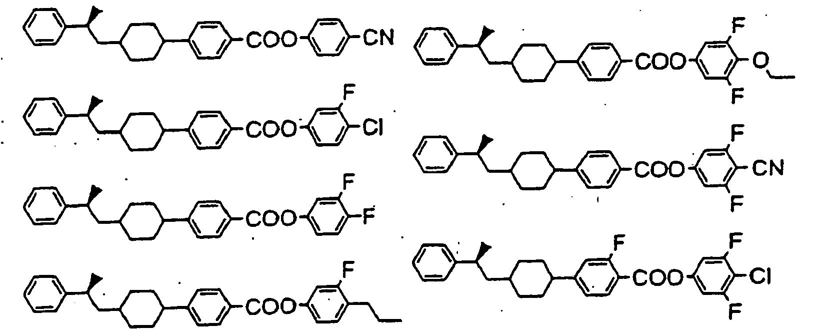

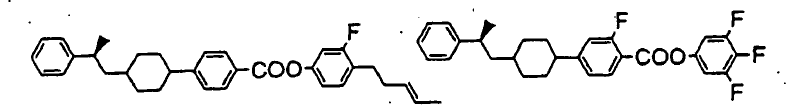

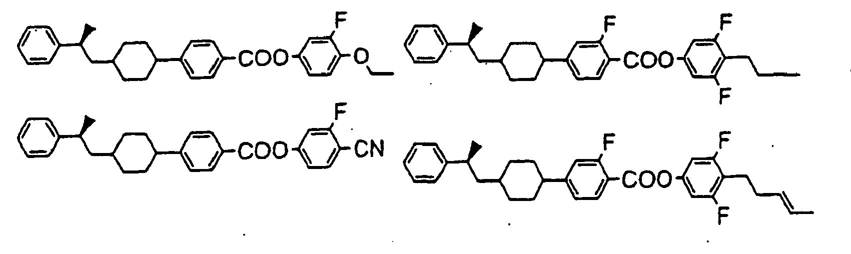

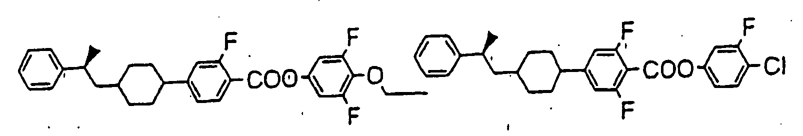

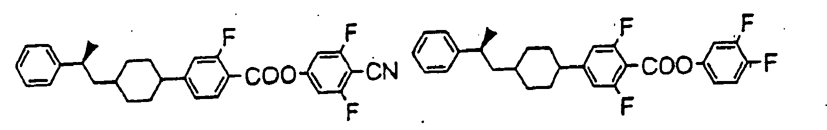

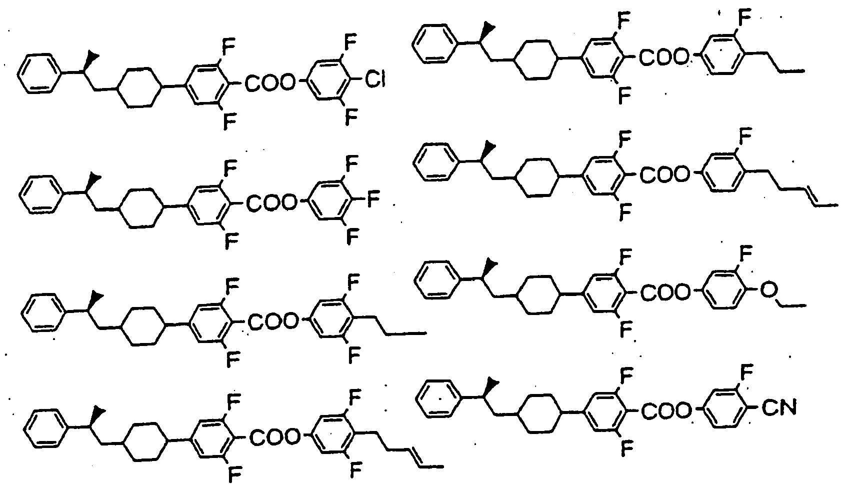

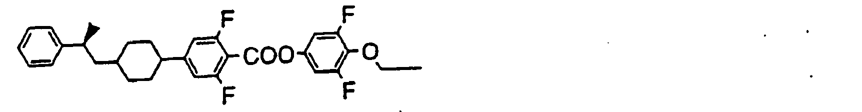

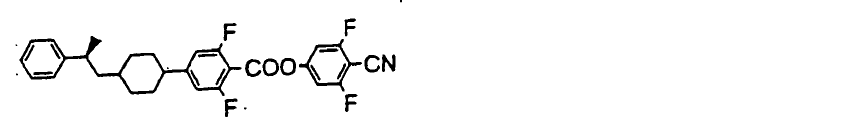

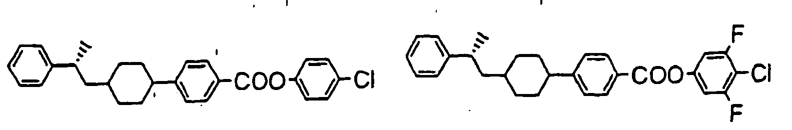

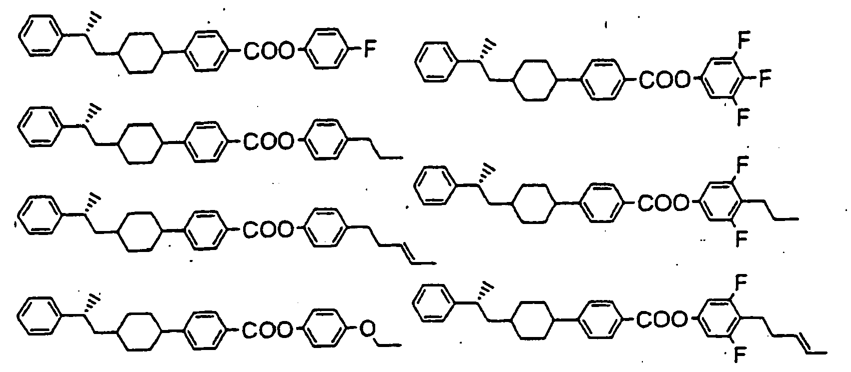

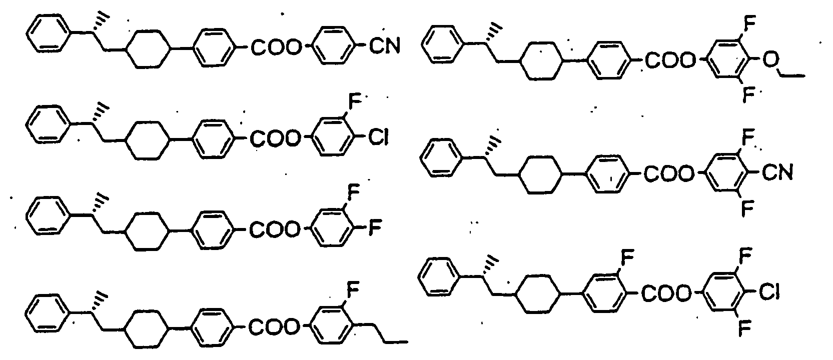

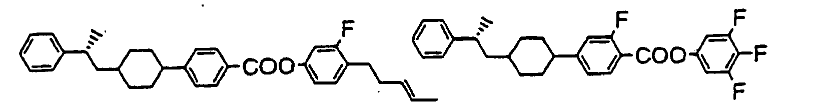

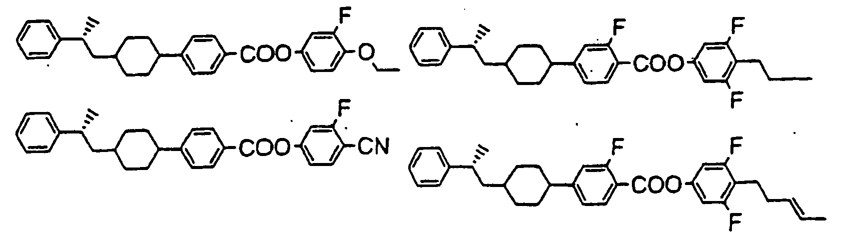

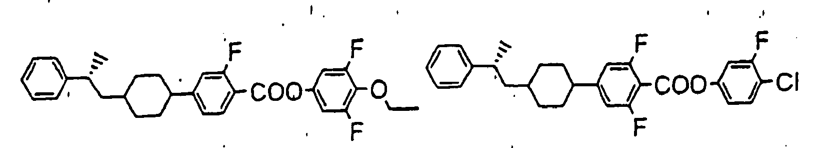

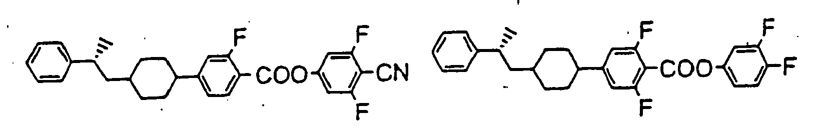

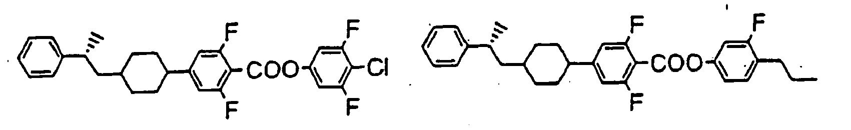

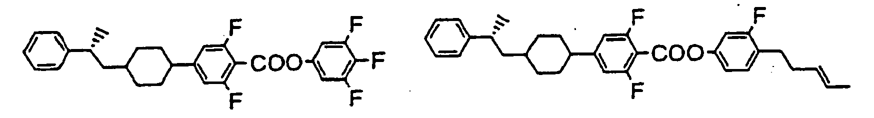

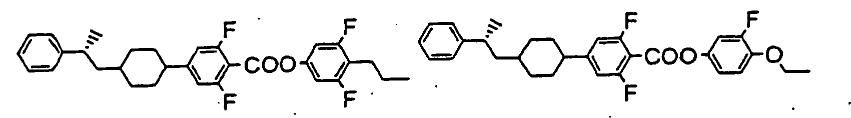

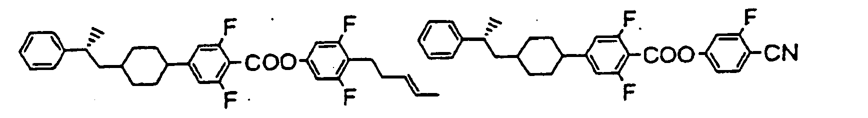

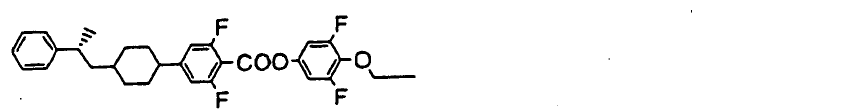

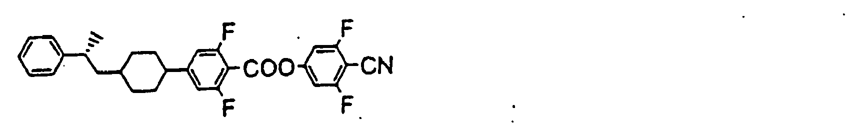

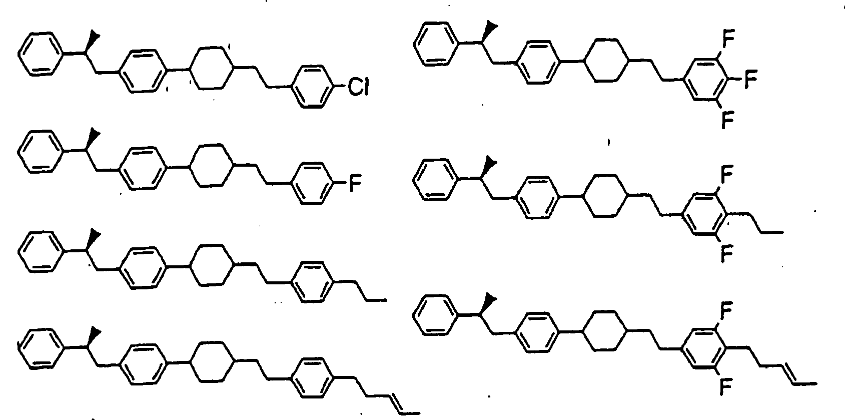

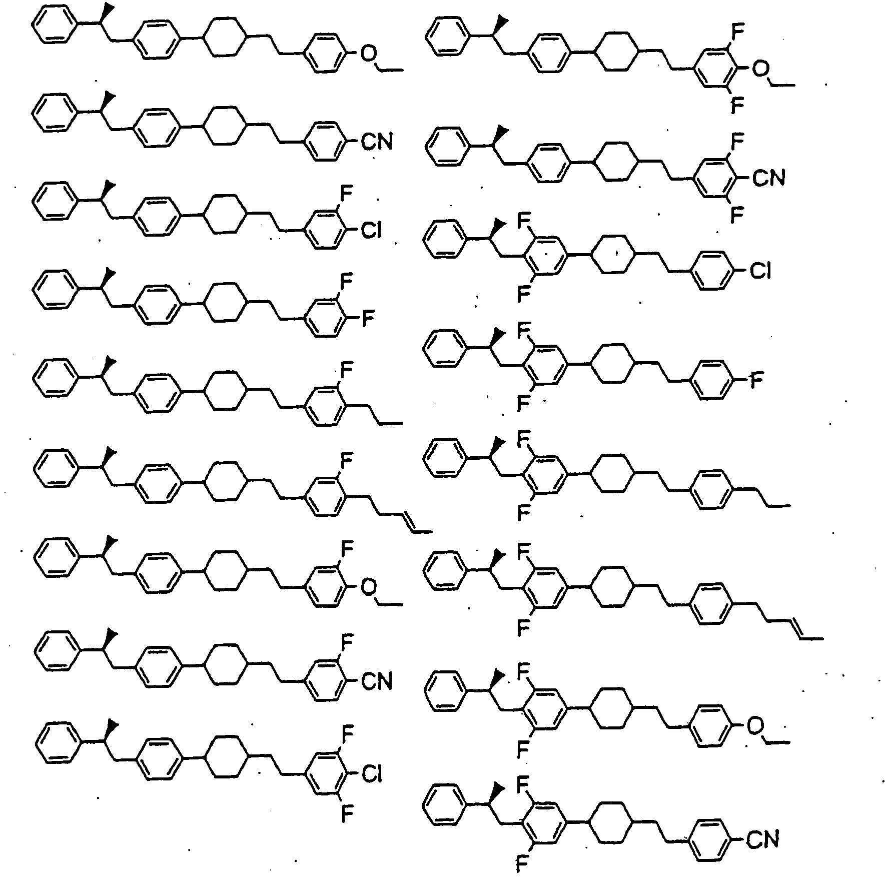

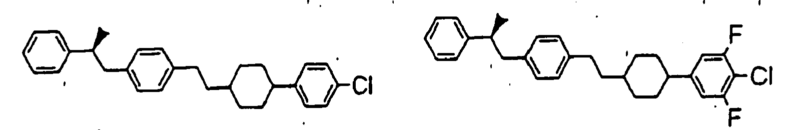

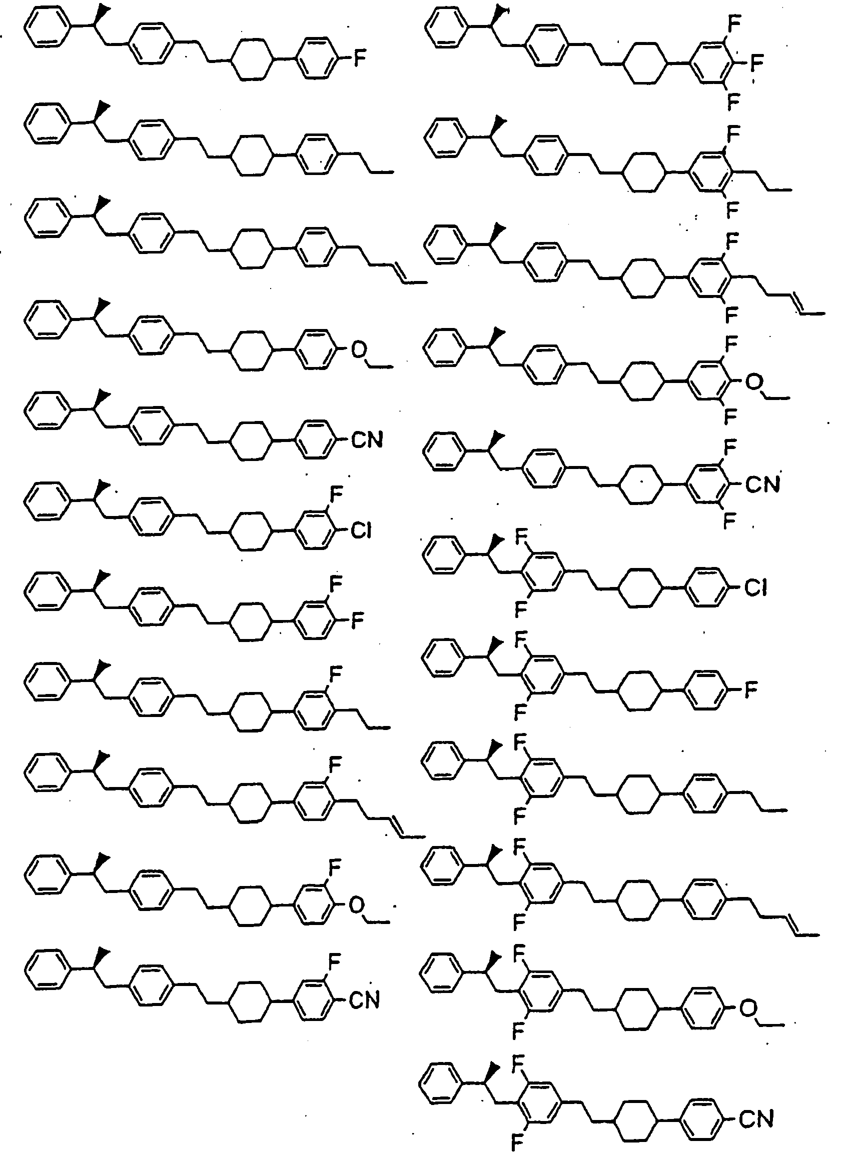

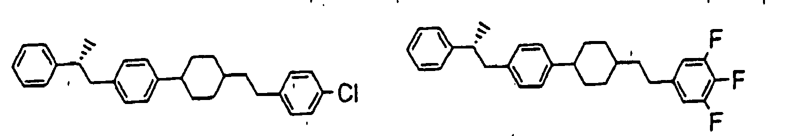

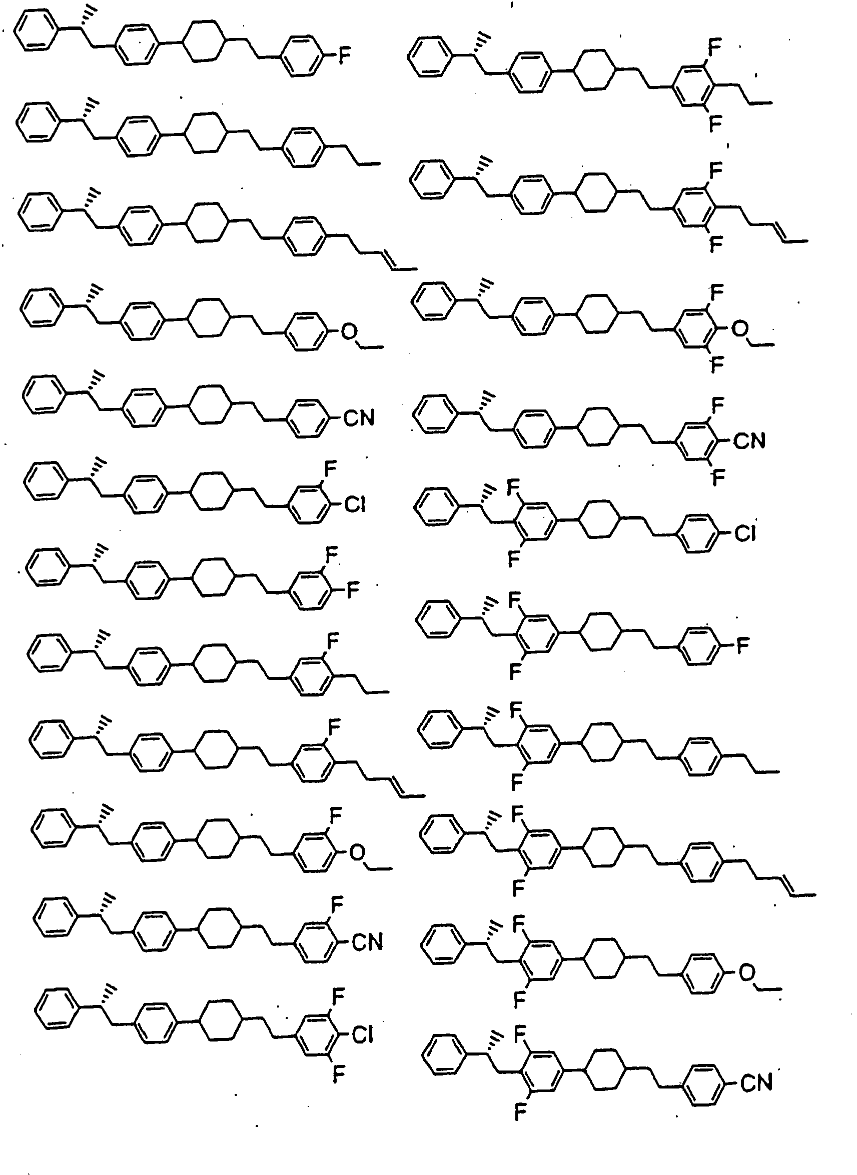

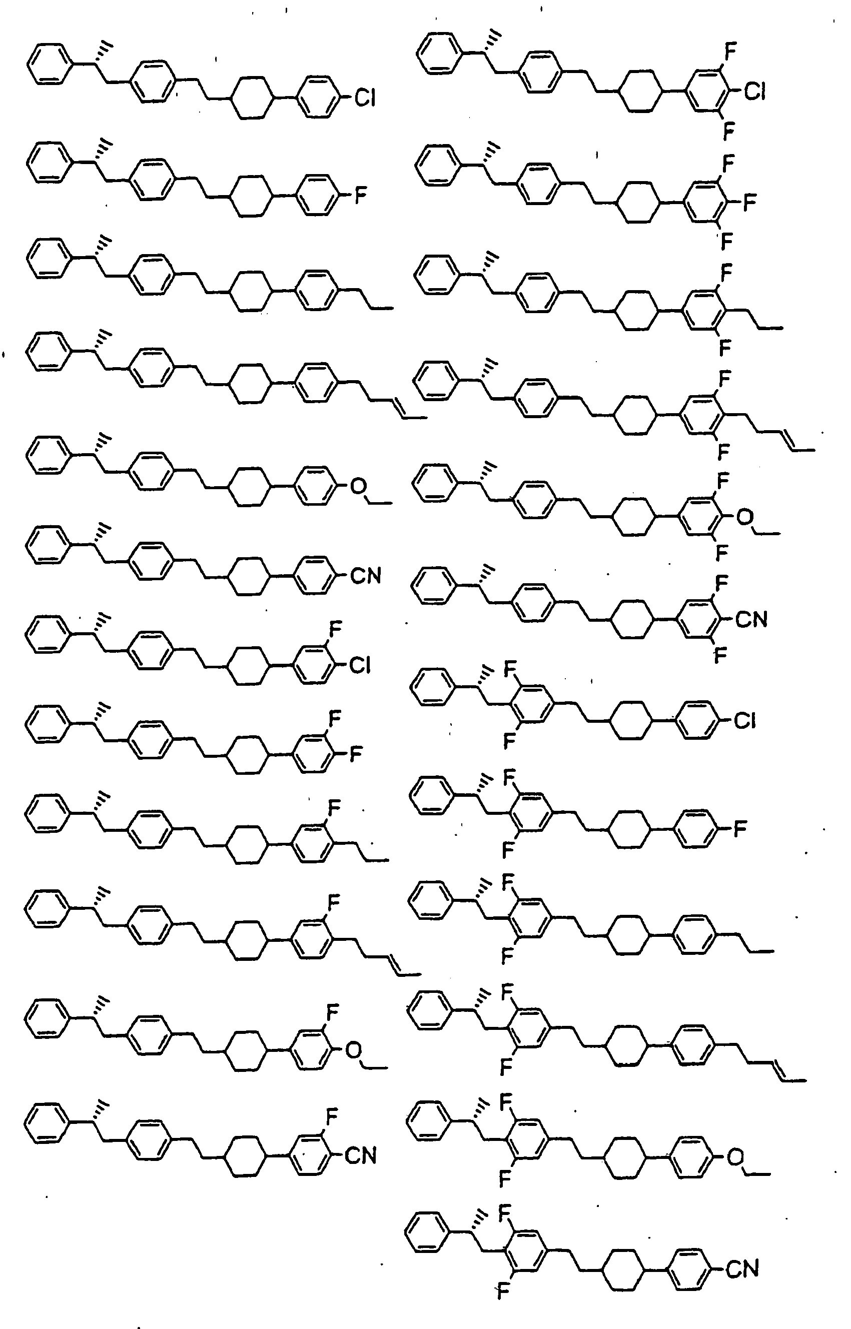

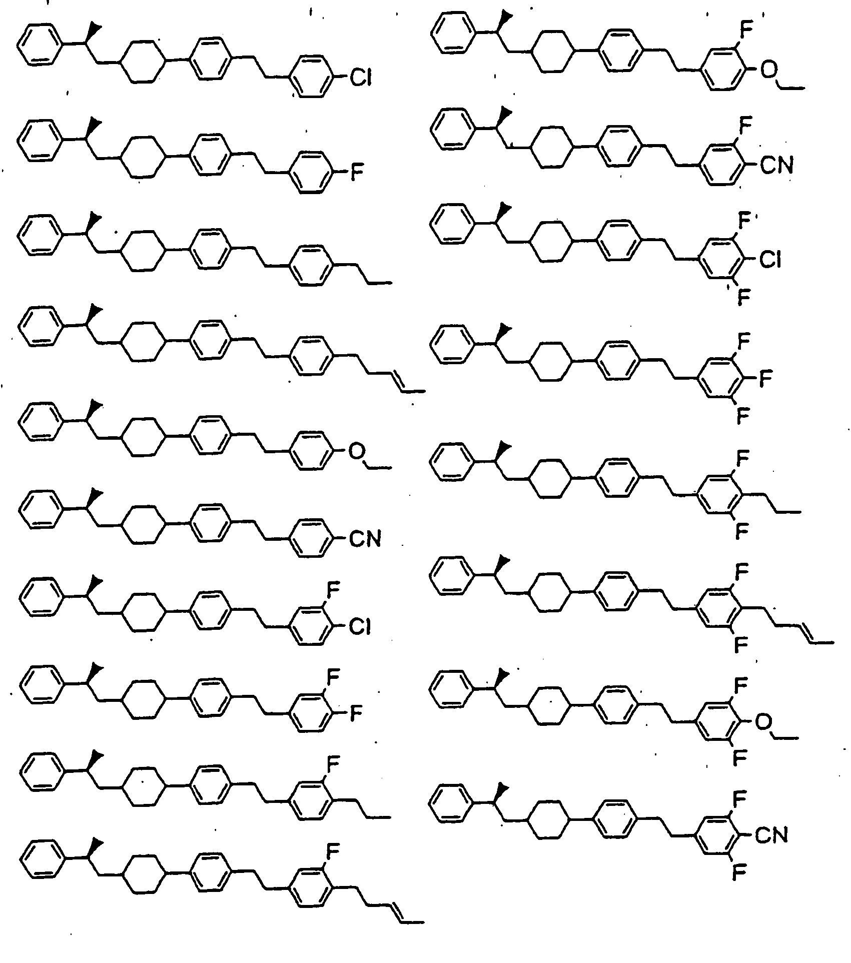

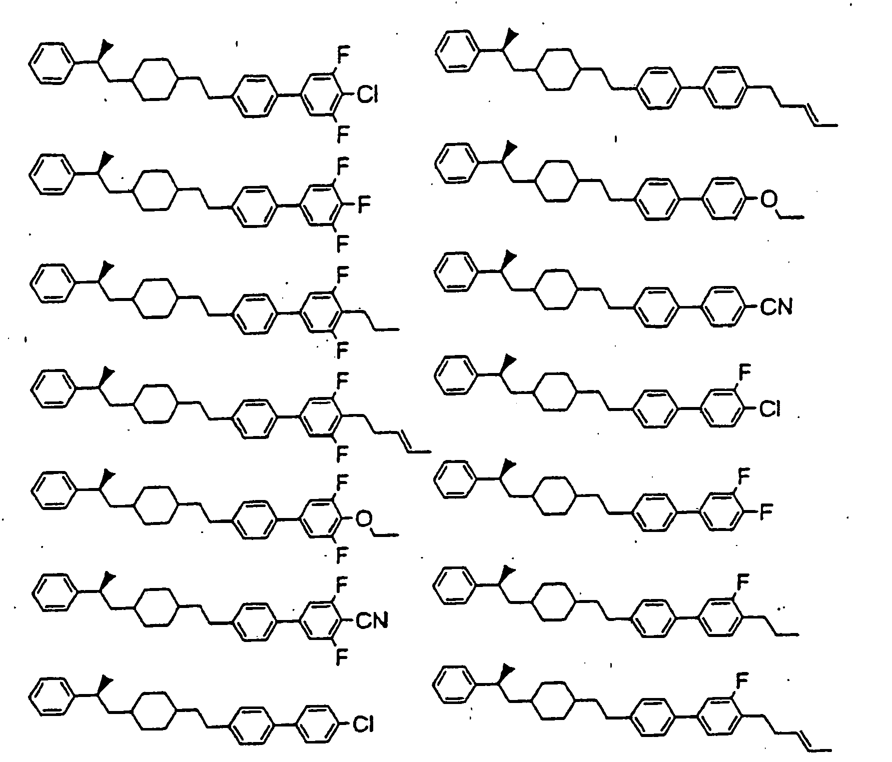

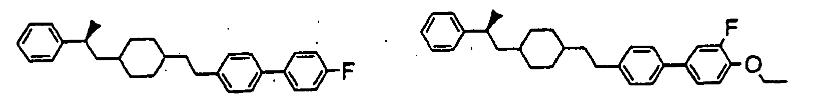

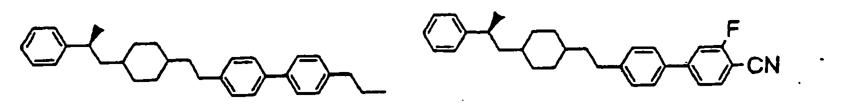

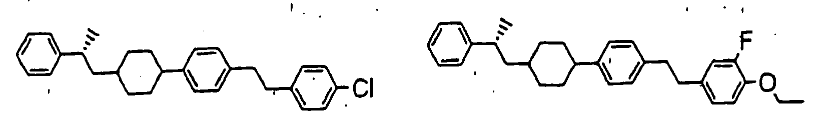

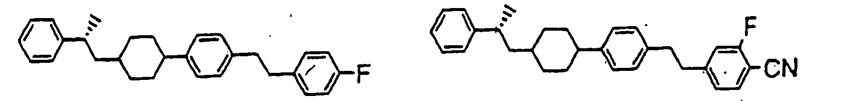

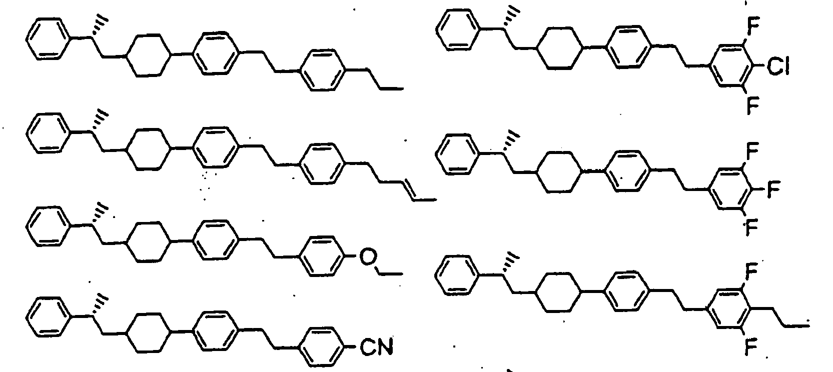

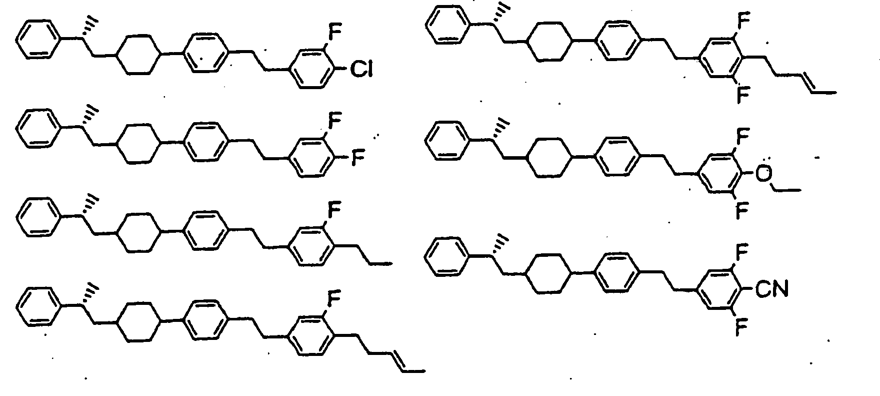

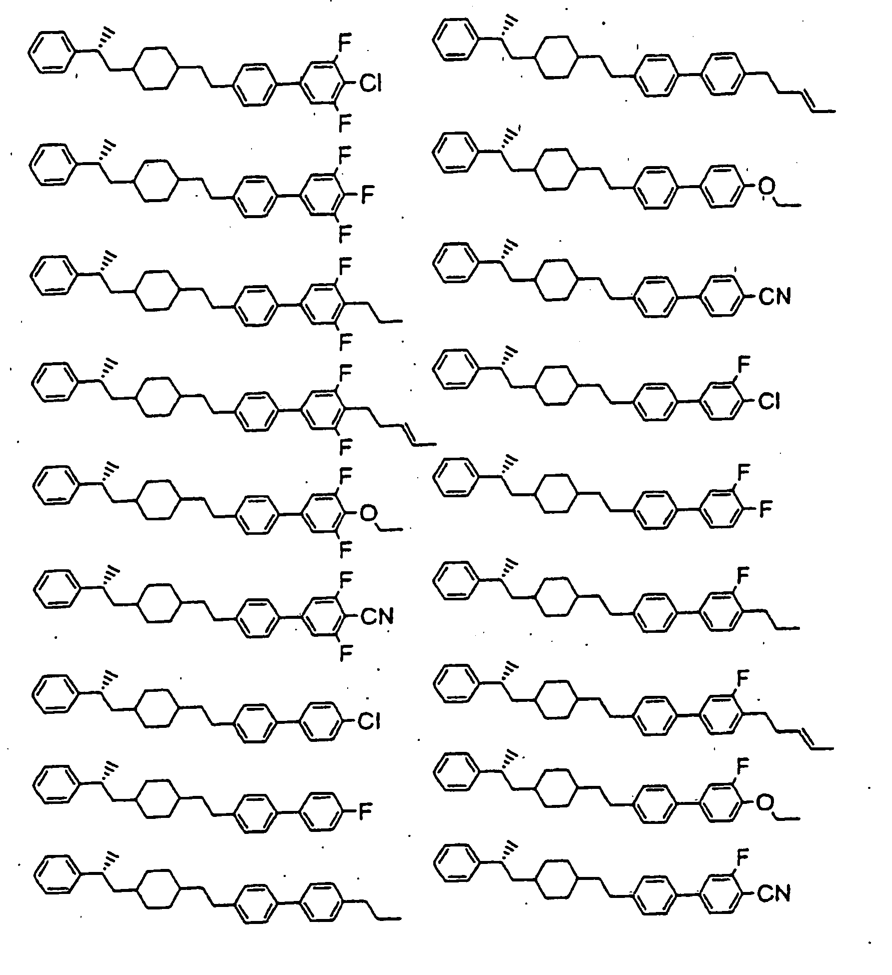

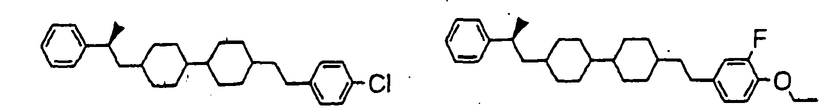

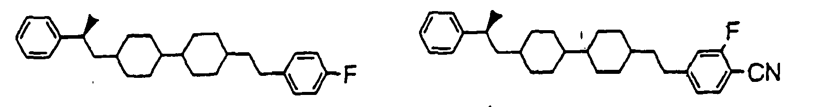

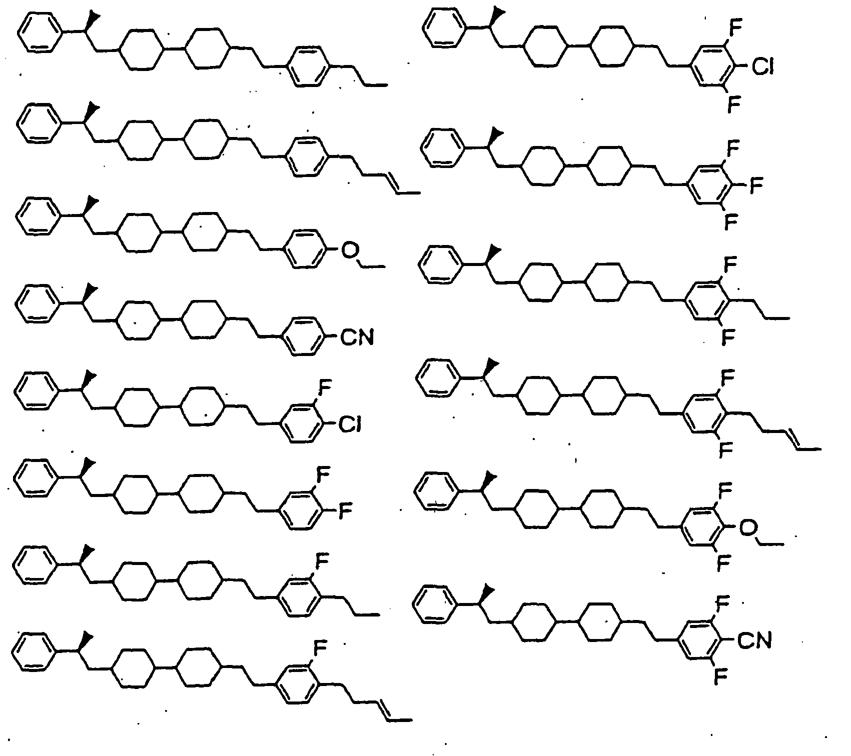

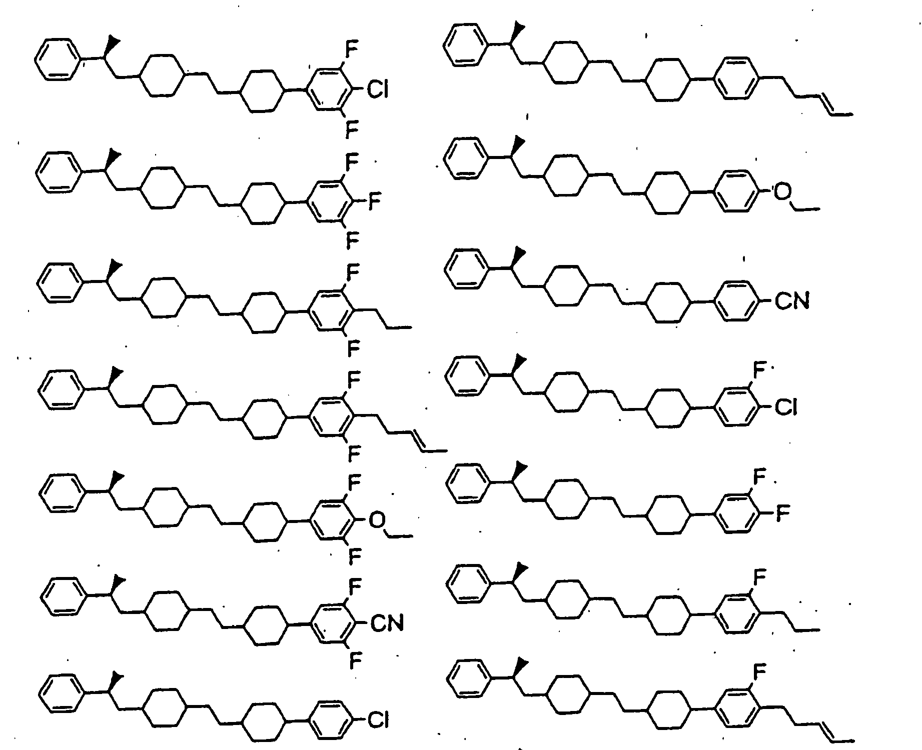

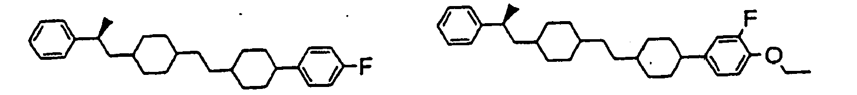

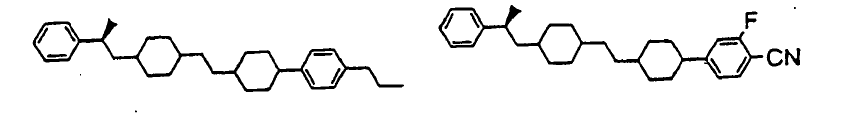

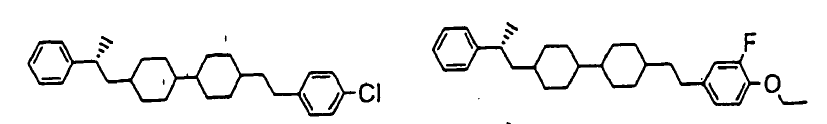

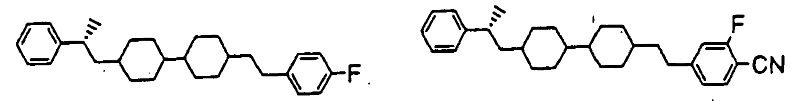

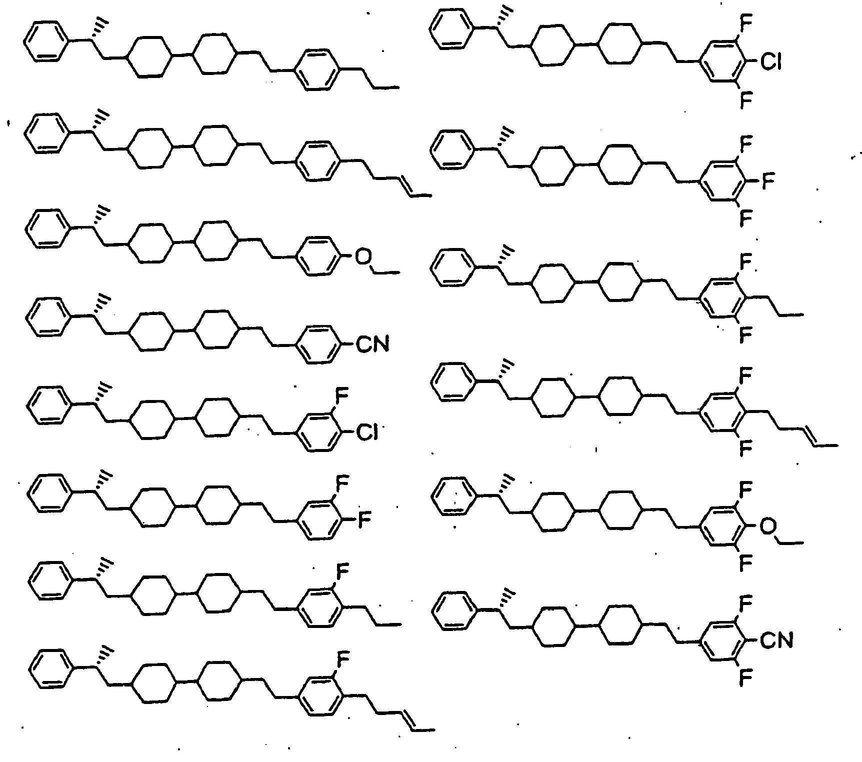

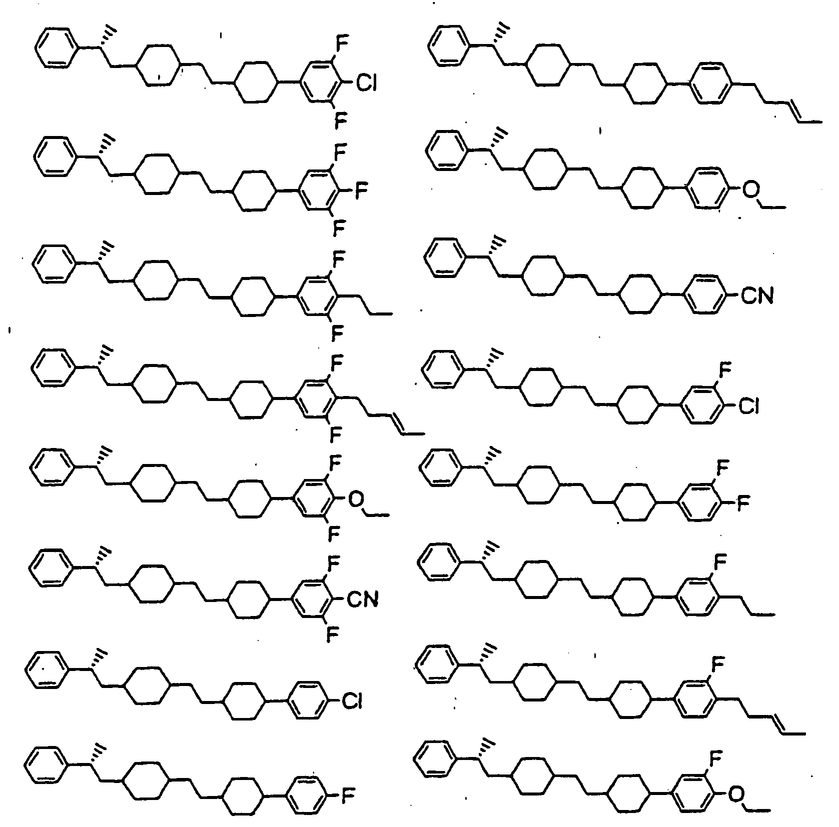

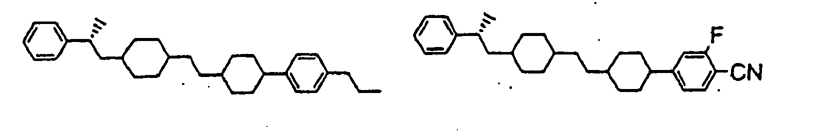

### EXAMPLE 2-4

Of a liquid crystal composition obtained by adding 5 parts by mass of (S)-1-[2,6-difluoro-4-[trans-4-(trans-4-propylcyclohexyl)cyclohexyl]phenyl]-2-phenylpropane to 95 parts by mass of a liquid crystal composition ZLI-1565 manufactured by Merck Ltd., the clear point (Tc) unit: °C) and the dynamic viscosity (η, 25°C, unit: cst) were measured. Further, of a liquid crystal composition obtained by adding 1 part by mass of (S)-1-[2,6-difluoro-4-[trans-4-(trans-4-propylcyclohexyl)cyclohexyl]phenyl]-2-phenylpropane to 100 parts by mass of the liquid crystal composition ZLI-1565 manufactured by Merck Ltd., the helical pitch length (P, 25°C, unit: µm) was measured. Similarly, with respect to (R)-1-[4-[4-(trans-4-propylcyclohexyl)phenyl]phenyl]-2-phenylpropane, Tc, η and P were measured. The results are shown in Table 2-1. Here, the liquid crystal composition ZLI-1565 manufactured by Merck Ltd. had Tc of 86.0°C and η of 15.7 cst. As a Comparative Example, the results with respect to R-811 are shown in Table 2-1.

**Table 2-1**

| | Optically active compound | Tc (°C) | η (cst) | P (µm) |
|---|---|---|---|---|
| Ex. | (R)-1-[4-[4-(trans-4-propylcyclohexyl)phenyl]phenyl]-2-phenylpropane | 155 | 22.2 | 6.9 |
| | (S)-1-[2,6-difluoro-4-[trans-4-(trans-4-propylcyclohexyl) cyclohexyl]phenyl]-2-phenylpropane | 102 | 21.0 | 9.0 |
| Comp. Ex. | R-811 | 79.5 | 22.2 | 10.4 |

### INDUSTRIAL APPLICABILITY

The liquid crystal composition containing the optically active compound of the present invention is a composition novel prior to filing of the present application, and is a liquid crystalline compound, and further, is useful as an optically active compound to be added to the above liquid crystal composition. Namely, it has a high helical twisting power, it provides a small helical pitch length induced, and at the same time, it has a low viscosity, and a liquid crystal element employing the liquid crystal composition of the present invention may have a high speed of response. Further, the liquid crystal composition employing the liquid crystal composition of the present invention has a high refractive index anisotropy (Δn), an extremely high transition temperature (Tc) from the liquid crystal phase to the isotropic phase, and has a low viscosity. Further, it is chemically stable, and is excellent in compatibility with another compound such as another liquid crystal or non-liquid crystal compound. Further, the liquid crystal composition employing the optically active compound of the present invention has such a characteristic that it has a high dielectric anisotropy (Δε), and may be driven at a low voltage.

Accordingly, the addition amount of such an optically active compound is small when it is added to a liquid crystal composition, and thus substantially no increase in the viscosity, decrease in the speed of response, increase in the driving voltage or reduction of the operating temperature range will be caused. At the same time, substantially no decrease in Tc of the liquid crystal composition will be caused, and accordingly a liquid crystal electro-optical element can be driven even at a high temperature range.

Particularly, such an optically active compound having the above characteristics is extremely effective even by addition of a small amount when used for a cholesteric liquid crystal composition to which addition of a large amount of an optically active compound is required, and which is usually considered to have a low speed of response and a high driving voltage, and a liquid crystal display element having brightness and a high contrast can be obtained.

Further, when the liquid crystal composition containing the optically active compound of the present invention is employed to obtain a TN or STN liquid crystal display element, uniform twist alignment can be achieved, and when it is used for a reflective cholesteric liquid crystal element, an aimed reflection wavelength will be obtained.

Further, the liquid crystal composition containing the optically active acetylene derivative compound of the present invention may also be used for various modes such as an active matrix element, a polymer dispersion liquid crystal element, a GH liquid crystal element employing a polychromatic colorant and a ferroelectric liquid crystal element. Further, it may also be used for applications other than for display, such as a dimmer element, a dimmer window, an optical shutter, a polarization exchange element, a varifocal lens, an optical color filter, a colored film, an optical recording element and a temperature indicator.

## Claims

1. A liquid crystal composition,containing at least an optically active compound of the following formula (2) (C* is asymmetric carbon):
(2) R¹-A¹-C* HX¹-Y¹-A²-Z ¹-A³-Z²-A⁴-R²
wherein A¹ is a non-substituted 1,4-phenylene group, a 1,4-phenylene group substituted with at least one halogen atom or a non-substituted 2,6-naphthylene group,
each of A², A³, and A⁴ which are independent of one another, is a non-substituted 1,4-phenylene group, a 1,4-phenylene group substituted with at least one halogen atom or a non-substituted trans-1,4-cyclohexylene group,
each of R¹ and R² which are independent of each other, is a C₁₋₁₀ aliphatic hydrocarbon group, a C₁₋₁₀ aliphatic hydrocarbon group substituted with at least one halogen atom, a hydrogen atom, a halogen atom or a cyano group, provided that in a case of a C₁₋₁₀ aliphatic hydrocarbon group or a C₁₋₁₀ aliphatic hydrocarbon group substituted with at least one halogen atom, an ethereal oxygen atom (-O-) may be inserted in the carbon-carbon linkage in the group or the carbon-carbon linkage connecting the group and the ring,
X¹ is -F, -CH₃, -CH₂F, -CHF₂ or -CF₃,
Y¹ is -CH₂- , -CO-, -CH₂CH₂-, -COO- , CH₂CO-, -COCH₂-, -CH₂O-, -CH₂CH₂CH₂- , -CH₂COO-, -COOCH₂-; -CH₂CH₂CO-, -CH₂COCH₂-, -COCH₂CH₂-, -CH₂CH₂O- or -CH₂OCH₂-, and
each of Z¹ and Z² which are independent of each other, is -COO-, -OCO-, -CH₂O-, -OCH₂-, -CH₂CH₂-, -C≡C-, -CF=CF-or a single bond,
provided that a case where Y¹ is -CO- or -CH₂O- is excluded, and when A² is a non-substituted 1,4-phenylene group or a 1,4-phenylene group having at least one halogen atom, both A³ and A⁴ are trans-1,4-cyclohexylene groups, and Z¹ is a single bond, Z² is -COO-, -OCO-, -CH₂O-, -OCH₂-, -CF=CF- or a single bond.

2. The liquid crystal composition according to Claim 1, which contains an optically active compound of the formula (2) wherein A¹ is a non-substituted 1,4-phenylene group or a 1,4-phenylene group having one or two fluorine atom(s), X¹ is -CH₃, and Y¹ is -CH₂-.

3. The liquid crystal composition according to Claim 2, which contains an optically active compound of the formula (2) wherein each of A², A³ and A⁴ which are independent of one another, is a non-substituted 1,4-phenylene group, a 1,4-phenylene group having one or two fluorine atom(s) or a non-substituted trans-1,4-cyclohexylene group, and each of Z¹ and Z² which are independent of each other, is -COO-, -CH₂CH₂- or a single bond.

4. The optically active compound according to Claim 3, wherein in the formula (2), A⁴ is a 1,4-phenylene group having one or two fluorine atom(s), and R² is a cyano group.

5. The liquid crystal composition according to Claim 3, which contains an optically active compound of the formula (2) wherein A² is a 1,4-phenylene group having one or two fluorine atom(s).

6. A liquid crystal electro-optical element, which comprises the liquid crystal composition as defined in any one of Claims 1 to 5 disposed between substrates having an electrode.

## Patentansprüche

1. Flüssigkristallzusammensetzung, welche mindestens eine optisch aktive Verbindung der folgenden Formel (2) (C ist ein asymmetrisches Kohlenstoffatom) enthält:
(2) R¹-A¹-C*HX¹-Y¹-A²-Z¹-A³-Z²-A⁴-R²
wobei A¹ eine nicht-substituierte 1,4-Phenylengruppe, eine mit mindestens einem Halogenatom substituierte 1,4-Phenylengruppe oder eine nicht-substituierte 2,6-Naphthylengruppe ist,
jedes von A², A³ und A⁴, welche voneinander unabhängig sind, eine nicht-substituierte 1,4-Phenylengruppe, eine mit mindestens einem Halogenatom substituierte 1,4-Phenylengruppe oder eine nicht-substituierte trans-1,4-Cyclohexylengruppe ist,
jedes von R¹ und R², welche voneinander unabhängig sind, eine C₁₋₁₀-aliphatische Kohlenwasserstoffgruppe, eine mit mindestens einem Halogenatom substituierte C₁₋₁₀-aliphatische Kohlenwasserstoffgruppe, ein Wasserstoffatom, ein Halogenatom oder eine Cyanogruppe ist, mit der Maßgabe, daß in einem Fall einer C₁₋₁₀-aliphatischen Kohlenwasserstoffgruppe oder einer mit mindestens einem Halogenatom substituierten C₁₋₁₀-aliphatischen Kohlenwasserstoffgruppe ein etherisches Sauerstoffatom (-O-) in die Kohlenstoff-Kohlenstoff-Verknüpfung in der Gruppe oder in der Kohlenstoff-Kohlenstoff-Verknüpfung, welche die Gruppe und den Ring verbindet, insertiert sein kann,
X¹ -F, -CH₃, -CH₂F, -CHF₂ oder -CF₃ ist,
Y¹ -CH₂-, -CO-, -CH₂CH₂-, -COO-, CH₂CO-, -COCH₂-, -CH₂O-, -CH₂CH₂CH₂-, -CH₂COO-, -COOCH₂-, -CH₂CH₂CO-, -CH₂COCH₂-, -COCH₂CH₂-, -CH₂CH₂O-oder -CH₂OCH₂- ist, und
jedes von Z¹ und Z², welche voneinander unabhängig sind, -COO-, -OCO-, -CH₂O-, -OCH₂-, -CH₂CH₂-,-C≡C-, -CF=CF- oder eine Einfachbindung ist, mit der Maßgabe, dass ein Fall, in welchem Y¹ -CO- oder -CH₂O- ist, ausgeschlossen ist, und wenn A² eine nicht-substituierte 1,4-Phenylengruppe oder eine 1,4-Phenylengruppe mit mindestens einem Halogenatom ist, sowohl A³ als auch A⁴ trans-1,4-Cyclohexylengruppen sind, und Z¹ eine Einfachbindung ist, Z² -COO-, -OCO-, -CH₂O-, -OCH₂-, -CF=CF- oder eine Einfachbindung ist.

2. Flüssigkristallzusammensetzung nach Anspruch 1, welche eine optisch aktive Verbindung der Formel (2) enthält, wobei A¹ eine nicht-substituierte 1,4-Phenylengruppe oder eine 1,4-Phenylengruppe mit einem oder zwei Fluoratom(en) ist, X¹ -CH₃ ist, und Y¹ -CH₂- ist.

3. Flüssigkristallzusammensetzung nach Anspruch 2, welche eine optisch aktive Verbindung der Formel (2) enthält, wobei jedes von A², A³ und A⁴, welche voneinander unabhängig sind, eine nicht-substituierte 1,4-Phenylengruppe, eine 1,4-Phenylengruppe mit einem oder zwei Fluoratom(en) oder eine nicht-substituierte trans-1,4-Cyclohexylengruppe ist, und jedes von Z¹ und Z², welche voneinander unabhängig sind, -COO-, -CH₂CH₂- oder eine Einfachbindung ist.

4. Optisch aktive Verbindung nach Anspruch 3, wobei in der Formel (2) A⁴ eine 1,4-Phenylengruppe mit einem oder zwei Fluoratom(en) ist, und R² eine Cyanogruppe ist.

5. Flüssigkristallzusammensetzung nach Anspruch 3, welche eine optisch aktive Verbindung der Formel (2) enthält, wobei A² eine 1,4-Phenylengruppe mit einem oder zwei Fluoratom(en) ist.

6. Elektrooptisches Flüssigkristallelement, welches die Flüssigkristallzusammensetzung nach einem der Ansprüche 1 bis 5, angeordnet zwischen Substraten mit einer Elektrode, umfaßt.

## Revendications

1. Composition de cristaux liquides contenant au moins un composé optiquement actif de formule (2) suivante (C* est un carbone asymétrique) :
(2) R¹-A¹-C*HX¹-Y¹-A²-Z¹-A³-Z²-A⁴-R²
dans laquelle A¹ est un groupe 1,4-phénylène non substitué, un groupe 1,4-phénylène substitué par au moins un atome d'halogène ou un groupe 2,6-naphtylène non substitué,
chacun de A², A³, et A⁴, qui sont indépendants les uns des autres, est un groupe 1,4-phénylène non substitué, un groupe 1,4-phénylène substitué par au moins un atome d'halogène ou un groupe trans-l,4-cyclohexylène non substitué,
chacun de R¹ et R², qui sont indépendants l'un de l'autre, est un groupe hydrocarboné aliphatique en C₁-C₁₀, un groupe hydrocarboné aliphatique en C₁-C₁₀ substitué par au moins un atome d'halogène, un atome d'hydrogène, un atome d'halogène ou un groupe cyano, avec la réserve que dans le cas d'un groupe hydrocarboné aliphatique en C₁-C₁₀ ou d'un groupe hydrocarboné aliphatique en C₁-C₁₀ substitué par au moins un atome d'halogène, un atome d'oxygène d'éther (-O-) peut être inséré dans la liaison carbone-carbone du groupe ou dans la liaison carbone-carbone liant le groupe et le cycle,
X¹ est -F, -CH₃, -CH₂F, -CHF₂ ou -CF₃,
Y¹ est -CH₂-, -CO-, -CH₂CH₂-, -COO-, CH₂CO-, -COCH₂-, -CH₂O-, -CH₂CH₂CH₂-, -CH₂COO-, -COOCH₂-, -CH₂CH₂CO-, -CH₂COCH₂-, -COCH₂CH₂-, -CH₂CH₂O- ou -CH₂OCH₂-, et
chacun de Z¹ et Z², qui sont indépendants l'un de l'autre, est -COO-, -OCO-, -CH₂O-, -OCH₂-, -CH₂CH₂-, -C≡C-, -CF=CF-, ou une liaison simple, avec la réserve que le cas où Y¹ est -CO- ou -CH₂O- est exclu, et quand A² est un groupe 1,4-phénylène non substitué ou un groupe 1,4-phénylène ayant au moins un atome d'halogène, à la fois A³ et A⁴ sont des groupes trans-1,4-cyclohexylène, et Z¹ est une liaison simple, Z² est -COO-, -OCO-, -CH₂O-, -OCH₂-, -CF=CF- ou une liaison simple.

2. Composition de cristaux liquides selon la revendication 1, qui contient un composé optiquement actif de formule (2) dans laquelle A¹ est un groupe 1,4-phénylène non substitué ou un groupe 1,4-phénylène ayant un ou deux atome (s) de fluor, X¹ est -CH₃, et Y¹ est -CH₂-.

3. Composition de cristaux liquides selon la revendication 2, qui contient un composé optiquement actif de formule (2) dans laquelle chacun de A², A³ et A⁴, qui sont indépendants les uns des autres, est un groupe 1,4-phénylène non substitué, un groupe 1,4-phénylène ayant un ou deux atome(s) de fluor ou un groupe trans-1,4-cyclohexylène non substitué, et chacun de Z¹ et Z², qui sont indépendants l'un de l'autre, est -COO-, -CH₂CH₂- ou une liaison simple.

4. Composé optiquement actif selon la revendication 3, dans lequel dans la formule (2), A⁴ est un groupe 1,4-phénylène ayant un ou deux atome(s) de fluor, et R² est un groupe cyano.

5. Composition de cristaux liquides selon la revendication 3, qui contient un composé optiquement actif de formule (2) dans laquelle A² est un groupe 1,4-phénylène ayant un ou deux atome(s) de fluor.

6. Elément électro-optique à cristaux liquides, qui comprend la composition de cristaux liquides, telle que définie dans l'une quelconque des revendications 1 à 5, disposée entre des substrats ayant une électrode.
